# EUROPEAN PATENT APPLICATION

(11) **EP 3 023 969 A2**
(43) Date of publication of application: **25.05.2016**
(21) Application number: 15193603.6
(22) Date of filing: 09.11.2015
(51) Int. Cl.: G09G 3/00

(54) **DISPLAY AND METHOD AND ELECTRONIC DEVICE**

(30) Priority: 19.11.2014 KR 20140161711
(71) Applicant: Samsung Electronics Co., Ltd., Gyeonggi-do 16677 (KR)
(72) Inventor: PARK, Ken-Hyung, 16677 Gyeonggi-do (KR); KIM, Min-Young, 16677 Gyeonggi-do (KR); SHIN, Hyung-Seok, 16677 Gyeonggi-do (KR); HEO, Chang-Ryong, 16677 Gyeonggi-do (KR); KIM, Tae-Kyung, 16677 Gyeonggi-do (KR); KIM, Tae-Seon, 16677 Gyeonggi-do (KR)
(74) Representative: Lubberdink, Pim

(57) **Abstract**

A method and an electronic device for displaying an image photographed by a photographing device are provided. The electronic device may select a first photographing device from a plurality of omnidirectional photographing devices arranged in different locations within a specified area and display an image photographed by the first photographing device on a display. When a second photographing device is selected while an image photographed by the first photographing device is displayed, the electronic device may determine a user's viewpoint viewing the displayed image and display an image of an object view in which an object corresponding to the user's viewpoint is photographed among images photographed by the second photographing device on the display.

## Description

### TECHNICAL FIELD

The present disclosure relates to a method and an electronic device for displaying an image photographed by a photographing device.

### BACKGROUND

The term "wearable device" refers to an electronic device that is provided in a form that is wearable on the body. A wearable device may include, for example, a device wearable on a user's head, and the device may be called, for example, a head mounted display (HMD) or a head mounted theater (HMT). The head mounted electronic device may output a screen in front of a user's eyes (for example, in a user's line of sight) and provide the user with augmented reality (AR) and virtual reality (VR) through the screen. Further, the head mounted electronic device may control the output screen according to a user input (for example, head movement).

The head mounted electronic device may be largely divided into a see-through type that provides the AR and a see-closed type that provide the VR. The see-through type head mounted electronic device may compose and combine virtual targets or objects on the basis of the real world using characteristics of a semi permeable lens to reinforce and provide additional information which is difficult to be acquired based on the real world alone. The see-closed type head mounted electronic device is an electronic device having two displays which are located in front of a user's eyes, and may provide excellent immersion to the user since the user can enjoy contents (e.g., games, movies, streaming, broadcasts, and the like) provided by an external input through an independent screen while being alone.

The above information is presented as background information only to assist with an understanding of the present disclosure. No determination has been made, and no assertion is made, as to whether any of the above might be applicable as prior art with regard to the present disclosure.

### SUMMARY

An image provided to the user through a head mounted electronic device is photographed by a single photographing device and is about a fixed viewpoint or view. When an image is photographed by a plurality of photographing devices (for example, broadcasting contents), the images photographed by the plurality of photographing devices may be provided to the user as pre-edited images. When the user views the fixed viewpoint or view screen or edited images through the head mounted electronic device, the user cannot select a screen of the view which the user desires to see and thus may not sufficiently feel realism.

Aspects of the present disclosure are to address at least the above-mentioned problems and/or disadvantages and to provide at least the advantages described below. Accordingly, an aspect of the present disclosure is to provide a display method and an electronic device which allow the user to selectively view images photographed by a plurality of omnidirectional photographing devices arranged in different locations within a specified area (for example, a location for performances, a stadium, or the like).

Another aspect of the present disclosure is to provide a display method and an electronic device which, even when the user selects a photographing device while the user views an image photographed by another photographing device selected by the user from a plurality of omnidirectional photographing devices arranged in different locations within a specified area, allow the user to successively view an object corresponding to a user's viewpoint before the change through the image photographed by the changed photographing device.

In accordance with an aspect of the present disclosure, a display method of an electronic device is provided. The display method includes selecting a first photographing device from a plurality of omnidirectional photographing devices arranged in different locations within a specified area, displaying an image photographed by the first photographing device, selecting a second photographing device from the photographing devices, determining a user's viewpoint viewing the displayed image and displaying an image of an object view in which an object corresponding to the user's viewpoint is photographed among images photographed by the second photographing device.

In accordance with another aspect of the present disclosure, an electronic device including a display and a controller is provided. The display may be configured to display images photographed by a plurality of omnidirectional photographing devices arranged in different locations within a specified area. The controller may be configured to determine, when a second photographing device is selected from the photographing devices while an image photographed by a first photographing device selected from the photographing devices is displayed on the display, a user's viewpoint viewing the displayed image and display an image of an object view in which an object corresponding to the user's viewpoint is photographed among images photographed by the second photographing device on the display.

In accordance with another aspect of the present disclosure, a non-transitory computer-readable recording medium having a program recorded therein to be executed in a computer is provided. The program includes executable commands for performing a process to be performed by a processor, the process including selecting a first photographing device from a plurality of omnidirectional photographing devices arranged in different locations within a specified area, displaying an image photographed by the first photographing device, selecting second photographing device from the photographing devices, determining a user's viewpoint viewing the displayed image, and displaying an image of an object view in which an object corresponding to the user's viewpoint is photographed among images photographed by the second photographing device.

According to various embodiments of the present disclosure, the user can selectively view images photographed by a plurality of omnidirectional photographing devices arranged in different locations within a specified area (for example, a location for performances, a stadium, or the like). The user can see a performance scene or a game scene through a screen of various views by selecting a photographing device arranged in a desired location among the photographing devices, thereby feeling improved realism.

According to various embodiments of the present disclosure, even when the user selects to change a photographing device from a plurality of omnidirectional photographing devices arranged in different locations within a specified area and views an image photographed by the selected photographing device, the user can successively view an object corresponding to a user's viewpoint before the photographing device is changed through the image photographed by the changed photographing device, so that the user can feel more improved realism.

Other aspects, advantages, and salient features of the disclosure will become apparent to those skilled in the art from the following detailed description, which, taken in conjunction with the annexed drawings, discloses various embodiments of the present disclosure.

### BRIEF DESCRIPTION OF THE DRAWINGS

The above and other aspects, features, and advantages of certain embodiments of the present disclosure will be more apparent from the following description taken in conjunction with the accompanying drawings, in which:
FIG. 1 is a block diagram illustrating a network environment including an electronic device according to various embodiments of the present disclosure;
FIG. 2 is a block diagram of an electronic device according to various embodiments of the present disclosure;
FIG. 3 is a block diagram of a program module according to various embodiments of the present disclosure;
FIG. 4 is a perspective view illustrating an example of a head mounted electronic device according to various embodiments of the present disclosure;
FIG. 5A is a perspective view illustrating an example in which electronic devices are coupled according to various embodiments of the present disclosure;
FIG. 5B is a perspective view illustrating an example in which a user wears an electronic device in which electronic devices are coupled according to various embodiments of the present disclosure;
FIG. 5C is a perspective view illustrating an example in which a screen is provided to a user wearing an electronic device in which electronic devices are coupled according to various embodiments of the present disclosure;
FIG. 6 is a block diagram illustrating an example of a configuration of a head mounted electronic device according to various embodiments of the present disclosure;
FIG. 7A illustrates an example in which an image of a view changed in accordance with a change in a user's viewpoint according to movement of the user's head is displayed according to various embodiments of the present disclosure;
FIG. 7B illustrates an example in which information on an object in an image is additionally displayed according to various embodiments of the present disclosure;
FIGS. 8A and 8B illustrate examples in which a plurality of photographing devices are arranged in different locations within a specified area according to various embodiments of the present disclosure;
FIG. 9 is a flowchart illustrating a display method of an electronic device according to various embodiments of the present disclosure;
FIG. 10 illustrates an example of a photographing device selection screen according to various embodiments of the present disclosure;
FIGS. 11A and 11B illustrate examples of a default view according to various embodiments of the present disclosure;
FIGS. 12A and 12B illustrate examples of changing a photographing device according to various embodiments of the present disclosure;
FIGS. 13A and 13B illustrate examples of determining a user's viewpoint according to various embodiments of the present disclosure;
FIG. 14 is a flowchart illustrating an example of a method of providing an image to an electronic device by a server according to various embodiments of the present disclosure; and
FIG. 15 is a block diagram illustrating an example of a configuration of a head mounted electronic device according to various embodiments of the present disclosure.

Throughout the drawings, like reference numerals will be understood to refer to like parts, components, and structures.

### DETAILED DESCRIPTION

The following description with reference to the accompanying drawings is provided to assist in a comprehensive understanding of various embodiments of the present disclosure as defined by the claims and their equivalents. It includes various specific details to assist in that understanding but these are to be regarded as merely exemplary. Accordingly, those of ordinary skill in the art will recognize that various changes and modifications of the various embodiments described herein can be made without departing from the scope and spirit of the present disclosure. In addition, descriptions of well-known functions and constructions may be omitted for clarity and conciseness.

The terms and words used in the following description and claims are not limited to the bibliographical meanings, but, are merely used by the inventor to enable a clear and consistent understanding of the present disclosure. Accordingly, it should be apparent to those skilled in the art that the following description of various embodiments of the present disclosure is provided for illustration purpose only and not for the purpose of limiting the present disclosure as defined by the appended claims and their equivalents.

It is to be understood that the singular forms "a," "an," and "the" include plural referents unless the context clearly dictates otherwise. Thus, for example, reference to "a component surface" includes reference to one or more of such surfaces.

In the present disclosure, the expressions "have", "may have", "include" or "may include" refer to the existence of a corresponding feature (e.g., numerical value, function, operation, or components such as elements), and do not exclude existence of additional features.

In the present disclosure, the expressions "A or B", "at least one of A or/and B", or "one or more of A or/and B" may include all possible combinations of the items listed. For example, the expression "A or B", "at least one of A and B", or "at least one of A or B" may include (1) at least one A, (2) at least one B, or (3) both at least one A and at least one B.

The expressions such as "first", "second", or the like used in various embodiments of the present disclosure may modify various elements regardless of order or importance, and do not limit corresponding elements. The above expressions are used merely for the purpose of distinguishing an element from the other elements. For example, a first user device and a second user device indicate different user devices although both of them are user devices. For example, a first element may be termed a second element, and similarly, a second element may be termed a first element without departing from the scope of the present disclosure.

The term "specified" as used in the present disclosure may have a meaning of, for example, the "predetermined" or the "specific" according to a situation.

When it is mentioned that one element (e.g., a first element) is "(operatively or communicatively) coupled with/to or connected to" another element (e.g., a second element), it should be construed that the one element is directly connected to the other element or the one element is indirectly connected to the other element via yet another element (e.g., a third element). In contrast, it may be understood that when an element (e.g., first element) is referred to as being "directly connected," or "directly coupled" to another element (second element), there are no element (e.g., third element) interposed between them.

As used herein, the expression "configured to" may be interchangeably used with expressions such as "suitable for", "having the capability to", "designed to", "adapted to", "made to", or "capable of". The expression "configured to" may not necessarily mean "specially designed to" in terms of hardware. Alternatively, in some situations, the expression "device configured to" may mean that the device, together with other devices or components, "is able to". For example, the phrase "processor adapted (or configured) to perform A, B, and C" may mean a dedicated processor (e.g. embedded processor) only for performing the corresponding operations or a generic-purpose processor (e.g., central processing unit (CPU) or application processor (AP)) that can perform the corresponding operations by executing one or more software programs stored in a memory device.

The terms used herein are merely for the purpose of describing particular embodiments of the present disclosure and are not intended to limit the scope of other embodiments. Unless defined otherwise, all terms used herein, including technical and scientific terms, have the same meaning as those commonly understood by a person skilled in the art to which the present disclosure pertains. Such terms as those defined in a generally used dictionary are to be interpreted to have the meanings equal to the contextual meanings in the relevant field of the art, and are not to be interpreted to have ideal or excessively formal meanings unless clearly defined in the present disclosure. In some cases, even the term defined in the present disclosure should not be interpreted to exclude the various embodiments of the present disclosure.

For example, the electronic device may include at least one of a smartphone, a tablet personal computer (PC), a mobile phone, a video phone, an electronic book (e-book) reader, a desktop PC, a laptop PC, a netbook computer, a workstation server, a personal digital assistant (PDA), a portable multimedia player (PMP), a Moving Picture Experts Group phase 1 or phase 2 (MPEG-1 or MPEG-2) audio layer-3 (MP3) player, a mobile medical appliance, a camera, and a wearable device (e.g., a head-mounted-device (HMD) such as electronic glasses, electronic clothes, an electronic bracelet, an electronic necklace, an electronic appcessory, electronic tattoos, or a smart watch).

According to some embodiments of the present disclosure, the electronic device may be a smart home appliance. The smart home appliance may, for example, include at least one of a television (TV), a digital versatile disc (DVD) player, an audio player, a refrigerator, an air conditioner, a cleaner, an oven, a microwave oven, a washing machine, an air purifier, a set-top box, a home automation control panel, a security control panel, a TV box (e.g., HomeSync^{™} of Samsung, Apple TV^{™}, or Google TV^{™}), a game console (e.g., Xbox^{™}, PlayStation^{™}), an electronic dictionary, an electronic key, a camcorder, and an electronic frame.

According to an embodiment of the present disclosure, the electronic device may include at least one of various medical devices (e.g., various portable medical measuring devices (a blood glucose monitoring device, a heart rate monitoring device, a blood pressure measuring device, a body temperature measuring device, etc.), a magnetic resonance angiography (MRA), a magnetic resonance imaging (MRI), a computed tomography (CT) machine, and an ultrasonic machine), a navigation device, a global positioning system (GPS) receiver, an event data recorder (EDR), a flight data recorder (FDR), a vehicle infotainment devices, an electronic devices for a ship (e.g., a navigation device for a ship, and a gyro-compass), avionics, security devices, an automotive head unit, a robot for home or industry, an automatic teller machine (ATM) in a bank, a point of sale (POS) in a shop, or internet device of things (e.g., a light bulb, various sensors, an electric or gas meter, a sprinkler device, a fire alarm, a thermostat, a streetlamp, a toaster, sporting goods, a hot water tank, a heater, a boiler, etc.).

According to some embodiments of the present disclosure, the electronic device may include at least one of furniture or a part of a building/structure, an electronic board, an electronic signature receiving device, a projector, and various types of measuring devices (for example, a water meter, an electric meter, a gas meter, a radio wave meter and the like) including a camera function.

In various embodiments of the present disclosure, the electronic device may be a combination of one or more of the aforementioned various devices. According to some embodiments of the present disclosure, the electronic device may also be a flexible device. Also, the electronic device according to various embodiments of the present disclosure is not limited to the above-mentioned devices, and with the development of technology, may include new electronic devices.

Hereinafter, an electronic device according to various embodiments of the present disclosure will be described with reference to the accompanying drawings. As used herein, the term "user" may indicate a person who uses an electronic device or a device (e.g., an artificial intelligence electronic device) that uses an electronic device.

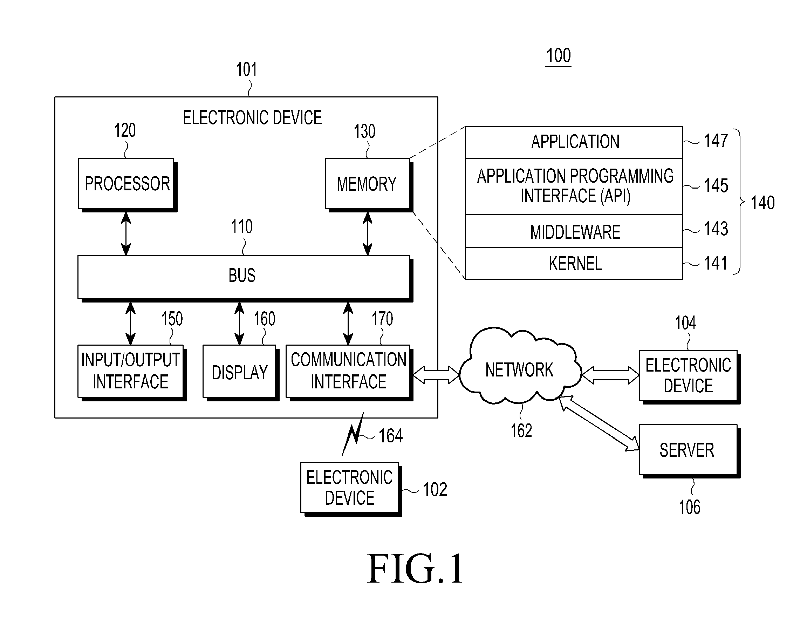

FIG. 1 illustrates a network environment including an electronic device according to various embodiments of the present disclosure.

Referring to FIG. 1, an electronic device 101 in a network environment 100 may include a bus 110, a processor 120, a memory 130, an input/output interface 150, a display 160, and a communication interface 170. In some embodiments of the present disclosure, the electronic device 101 may omit at least one of the above components 110 to 170 or further include other components.

The bus 110 may include, for example, a circuit for connecting the components 110 to 170 of the electronic device 101 and transmitting communication (for example, control messages and/or data) between the components.

The processor 120 may include one or more of a CPU, an AP, and a communication processor (CP). The processor 120, for example, may carry out operations or data processing relating to control and/or communication of at least one other element of the electronic device 101.

The processor 120 may be called a controller, or may include a controller as a part thereof or constitute a part of the controller. The controller may control at least one other component of the electronic device 101, for example, the memory 130, the input/output interface 150, the display 160, and the communication interface 170 to perform operations according to a display method according to various embodiments of the present disclosure.

The memory 130 may include a volatile memory and/or a non-volatile memory. The memory 130 may store, for example, commands or data related to at least one of the other components of the electronic device 101. According to an embodiment of the present disclosure, the memory 130 may store software and/or a program 140. For example, the program 140 may include a kernel 141, middleware 143, an application programming interface (API) 145, and/or application programs (or applications) 147. At least some of the kernel 141, the middleware 143, and the API 145 may be referred to as an operating system (OS).

The kernel 141 may control or manage system resources (for example, the bus 110, the processor 120, or the memory 130) used for executing an operation or function implemented by other programs (for example, the middleware 143, the API 145, or the application program 147). Furthermore, the kernel 141 may provide an interface through which the middleware 143, the API 145, or the application program 147 may access individual components of the electronic device 101 to control or manage system resources.

The middleware 143 may serve as, for example, an intermediary for allowing the API 145 or the application programs 147 to communicate with the kernel 141 to exchange data. Furthermore, with regard to task requests received from the applications 147, the middleware 143 may perform a control (for example, scheduling or load balancing) for the task requests using, for example, a method of assigning a priority, by which the system resources (for example, the bus 110, the processor 120, or the memory 130) of the electronic device 101 may be preferentially used, to at least one of the applications 147.

The API 145 is, for example, an interface by which the applications 147 control functions provided from the kernel 141 or the middleware 143, and may include, for example, at least one interface or function (for example, commands) for file control, window control, image processing, or text control.

The input/output interface 150 may serve as an interface capable of delivering a command or data, which is input from a user or another external device, to the component(s) other than the input/output interface 150 within the electronic device 101. Furthermore, the input/output interface 150 may output the instructions or data received from the other component(s) of the electronic device 101 to the user or another external device.

The display 160 may include a liquid crystal display (LCD), a light-emitting diode (LED) display, an organic LED (OLED) display, a microelectromechanical systems (MEMS) display, and an electronic paper display. For example, the display 160 may display various pieces of content (for example, text, images, videos, icons, symbols, and the like) to the user. The display 160 may include a touch screen and receive, for example, a touch, gesture, proximity, or hovering input using an electronic pen or the user's body part.

The communication interface 170 may configure communication between, for example, the electronic device 101 and an external device (for example, a first external electronic device 102, a second external electronic device 104, or a server 106). For example, the communication interface 170 may be connected to a network 162 through wireless or wired communication to communicate with the external device (for example, the second external electronic device 104 or the server 106) or may communicate with an external device (for example the first external electronic device 102) using a wireless communication 164.

The wireless communication may include at least one of, for example, Wi-Fi, Bluetooth (BT), near field communication (NFC), GPS, and cellular communication (for example, long term evolution (LTE), LTE-advanced (LTE-A), code division multiple access (CDMA), wideband CDMA (WCDMA), universal mobile telecommunication system (UMTS), wireless broadband (WiBro), global system for mobile communications (GSM), and the like). The wired communication may include at least one of, for example, a universal serial bus (USB), a high definition multimedia interface (HDMI), a recommended standard 232 (RS-232), and a plain old telephone service (POTS).

According to an embodiment of the present disclosure, the network 162 may include a telecommunication network, for example, at least one of a computer network (for example, a local area network (LAN) or a wide area network (WAN)), Internet, and a telephone network.

Each of the first and second external electronic devices 102 and 104 may be a device which is the same as or different from the electronic device 101. According to an embodiment of the present disclosure, the server 106 may include a group of one or more servers. According to various embodiments of the present disclosure, all or some of the operations performed by the electronic device 101 may be performed by another electronic device or a plurality of electronic devices (for example, the first external electronic device 102, the second external electronic device 104, or the server 106). According to an embodiment of the present disclosure, when the electronic device 101 should perform some functions or services automatically or by a request, the electronic device 101 may make a request for performing at least some functions related to the functions or services to another device (for example, the first external electronic device 102, the second external electronic device 104, or the server 106) instead of performing the functions or services by itself. The other electronic device (for example, the first external electronic device 102, the second external electronic device 104, or the server 106) may carry out the requested function or the additional function, and transfer a result thereof to the electronic device 101. The electronic device 101 may provide the requested functions or services based on the received result directly or after additional processing of the received result. To achieve this, for example, cloud computing, distributed computing, or client-server computing technology may be used.

According to an embodiment of the present disclosure, the electronic device 102 may be a head mounted electronic device which can be used while being attachable to and detachable from another electronic device (for example, the electronic device 101). In this case, the electronic device 102 may not include a display. For example, when the electronic device 101 is used while being coupled to the electronic device 102, the electronic device 101 may provide, through the display 160, a screen to the user who wears an electronic device to which the electronic device 101 and the electronic device 102 are coupled.

According to various embodiments of the present disclosure, images generated by photographing a performance scene or a game scene by using a plurality of photographing device arranged in different locations within a specified area (for example, a location for performances, a stadium, or the like) may be provided to the electronic device 101. Then, a screen of various views related to the performance scene or the game scene may be reproduced in the electronic device 101. According to various embodiments of the present disclosure, the plurality of photographing devices may be omnidirectional photographing devices. The omnidirectional photographing device may be a photographing device which can simultaneously photograph various directions such as a 360° camera. When the user views the image photographed by the omnidirectional photographing device through the head mounted electronic device, the user may feel realism as if being in the photographing place.

According to an embodiment of the present disclosure, the images photographed by the photographing devices may be transmitted to the electronic device 101 through a server (for example, the server 106). The server 106 may selectively provide the images photographed by the photographing devices to the electronic device 101. For example, the server 106 may be a server of a broadcasting station that transmits the images photographed by the photographing devices. According to an embodiment of the present disclosure, the images photographed by the photographing devices may be transmitted to the electronic device 101 without passing through the server. For example, the photographing devices may transmit the images to the electronic device 101 through the network 162. According to an embodiment of the present disclosure, the electronic device 101 may receive and reproduce the images photographed by the photographing devices in real time. According to an embodiment of the present disclosure, the electronic device 101 may reproduce the images photographed by the photographing devices after downloading the images. According to an embodiment of the present disclosure, the electronic device 101 may reproduce the images photographed by the photographing devices, which are stored in a recording medium.

According to various embodiments of the present disclosure, a controller (for example, the processor 120) of the electronic device 101 may display an image photographed by one photographing device selected from the photographing devices arranged in different locations within a specified area on the display 160. The display 160 may display images photographed by a plurality of omnidirectional photographing devices arranged in different location within a specified area. When another photographing device among the photographing devices is selected while the image photographed by the one photographing device is displayed through the display 160, a user's viewpoint viewing the displayed image may be determined. The controller may display, on the display 160, an image of a view (hereinafter, referred to as an object view) in which an object corresponding to the user's viewpoint is photographed among the images photographed by the other selected photographing device.

According to an embodiment of the present disclosure, the controller may display, on the display 160, an image starting at a view (hereinafter, referred to as a default view) specified to the selected photographing device among the images photographed by the selected photographing device.

According to an embodiment of the present disclosure, the controller may receive, through the network 162, the image photographed by the selected photographing device from a server that selectively provides the images photographed by the photographing devices.

According to an embodiment of the present disclosure, when another photographing device is selected while the image photographed by the one photographing device is displayed through the display 160, the controller may transmit viewpoint information on a user's viewpoint viewing the image displayed on the display 160 to the server and receive an image of an object view corresponding to the user's viewpoint from the server. According to an embodiment of the present disclosure, when another photographing device is selected while the image photographed by the one photographing device is displayed through the display 160, the controller may transmit identification information on the photographing device which photographs the displayed image and the viewpoint information on the user's viewpoint to the other photographing device and receive the image of the object view corresponding to the user's viewpoint from the other photographing device.

According to an embodiment of the present disclosure, the controller may display arrangement information indicating locations of the photographing devices within the specified area on the display 160 and receive an input for selecting one of the photographing devices. According to an embodiment of the present disclosure, when the arrangement information is displayed, the controller may display utilization fee information on each of the photographing devices on the display 160. When the controller receives the input for selecting one of the photographing devices, the controller may perform charging processing of the selected photographing device. According to an embodiment of the present disclosure, when the arrangement information is displayed, the controller may display information on the currently selected photographing device on the display 160.

According to an embodiment of the present disclosure, the photographing devices may transmit the images photographed by the photographing devices to the electronic device 101 without passing through the server. In this case, the electronic device 101 may make a request for the image to the photographing device selected by the user and receive and display the image. Further, identification information and location information on each of the photographing devices may be pre-stored in the photographing devices, respectively. When the photographing device is changed by the user, the electronic device 101 may transmit identification information on the photographing device and viewpoint information on the user's viewpoint before the change to the changed photographing device. The changed photographing device may provide an image of an object view in which the user views the object before the change to the electronic device 101 based on the identification information on the photographing device and the viewpoint information on the user's viewpoint before the change.

According to an embodiment of the present disclosure, the server 106 may store the images photographed by the photographing devices and provide a video on demand (VOD) service to the electronic device 101 by using the stored images.

According to an embodiment of the present disclosure, the electronic device 101 detects movement of the user. In that case, the electronic device 101 may receive an image of the view changed in accordance with the change in the user's viewpoint according to the movement of the user from the photographing device or the server 106 and provide the received image to the user.

According to an embodiment of the present disclosure, the photographing devices or the server 106 may transmit an omnidirectional image photographed by the photographing device selected from the photographing devices to the electronic device 101. In this case, when there is the movement of the user, the electronic device 101 may provide the changed view image to the user without receiving the changed view image in accordance with the change in the user's viewpoint from the selected photographing device or the server 106.

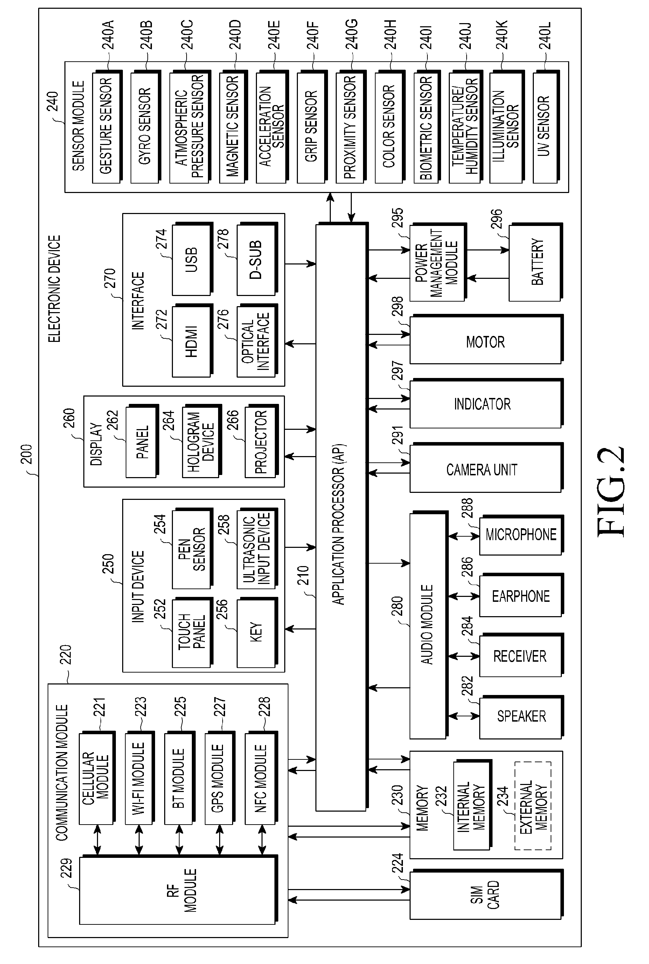

FIG. 2 is a block diagram of an electronic device according to various embodiments of the present disclosure.

Referring to FIG. 2, an electronic device 200 may include the entirety or part of the electronic device 101 illustrated in FIG. 1. The electronic device 200 may include at least one AP 210, a communication module 220, a subscriber identifier module (SIM) card 224, a memory 230, a sensor module 240, an input device 250, a display 260, an interface 270, an audio module 280, a camera module 291, a power management module 295, a battery 296, an indicator 297, and a motor 298.

The AP 210 may control a plurality of hardware or software components connected to the processor 210 by driving, for example, an OS or an application program and perform various types of data processing and calculations. The AP 210 may be implemented by, for example, a system on chip (SoC). According to an embodiment of the present disclosure, the AP 210 may further include a graphical processing unit (GPU) and/or an image signal processor. The AP 210 may include at least some of the components (for example, a cellular module 221) illustrated in FIG. 2. The AP 210 may load commands or data received from at least one of the other components in a volatile memory, which may be included in the memory 230, process the loaded commands or data, and store various pieces of data in the non-volatile memory.

The communication module 220 may have a configuration equal or similar to that of the communication interface 170 of FIG. 1. According to an embodiment of the present disclosure, the communication module 220 may include a cellular module 221, a Wi-Fi module 223, a BT module 225, a GPS module 227, an NFC module 228, and a radio frequency (RF) module 229.

The cellular module 221 may provide a voice call, an image call, a text message service, or an Internet service through, for example, a communication network. According to an embodiment of the present disclosure, the cellular module 221 may distinguish and authenticate the electronic device 200 within a communication network using a subscriber identification module (for example, the SIM card 224). According to an embodiment of the present disclosure, the cellular module 221 may perform at least some of the functions, which can be provided by the AP 210. According to an embodiment of the present disclosure, the cellular module 221 may include a CP.

The Wi-Fi module 223, the BT module 225, the GPS module 227, and the NFC module 228 may include a processor for processing data transmitted/received through the corresponding module. According to some embodiments of the present disclosure, at least some (for example, two or more) of the cellular module 221, the Wi-Fi module 223, the BT module 225, the GPS module 227, and the NFC module 228 may be included in one integrated chip (IC) or IC package.

The RF module 229 may transmit/receive, for example, a communication signal (for example, an RF signal). The RF module 229 may include, for example, a transceiver, a power amplifier module (PAM), a frequency filter, a low noise amplifier (LNA), and an antenna. According to an embodiment of the present disclosure, at least one of the cellular module 221, the Wi-Fi module 223, the BT module 225, the GPS module 227, and the NFC module 228 may transmit and receive RF signals through a separate RF module.

The SIM card 224 may include a card including a subscriber identification module and/or an embedded SIM, and contain unique identification information (for example, an integrated circuit card identifier (ICCID)) or subscriber information (for example, an international mobile subscriber identity (IMSI)).

The memory 230 may include an internal memory 232 or an external memory 234. The internal memory 232 may include at least one of, for example, a volatile memory (for example, a dynamic random access memory (DRAM), a static RAM (SRAM), a synchronous DRAM (SDRAM), and the like) and a non-volatile memory (for example, a one time programmable read only memory (OTPROM), a programmable ROM (PROM), an erasable and programmable ROM (EPROM), an electrically erasable and programmable ROM (EEPROM), a flash memory (for example, a NAND flash memory or a NOR flash memory), a hard driver, or a solid state drive (SSD).

The external memory 234 may further include a flash drive, for example, a compact flash CF, a secure digital (SD), a micro-SD, a mini-SD, an extreme digital (xD), a memory stick, or the like. The external memory 234 may be functionally and/or physically connected to the electronic device 200 through various interfaces.

The sensor module 240 may measure a physical quantity or detect an operation state of the electronic device 200, and may convert the measured or detected information into an electrical signal. The sensor module 240 may include, for example, at least one of a gesture sensor 240A, a gyro sensor 240B, an atmospheric pressure sensor 240C, a magnetic sensor 240D, an acceleration sensor 240E, a grip sensor 240F, a proximity sensor 240G, a color sensor (e.g., a red, green, blue (RGB) sensor) 240H, a biometric sensor 240I, a temperature/humidity sensor 240J, an illuminance sensor 240K, and an ultra violet (UV) sensor 240L. Additionally or alternatively, the sensor module 240 may include an E-nose sensor, an electromyography (EMG) sensor, an electroencephalogram (EEG) sensor, an electrocardiogram (ECG) sensor, an infrared (IR) sensor, an iris sensor, and/or a fingerprint sensor. The sensor module 240 may further include a control circuit for controlling one or more sensors included therein. In some embodiments of the present disclosure, the electronic device 200 may further include a processor configured to control the sensor module 240 as a part of or separately from the AP 210, and may control the sensor module 240 while the AP 210 is in a sleep state.

The input device 250 may include a touch panel 252, a (digital) pen sensor 254, a key 256, or an ultrasonic input device 258. The touch panel 252 may use at least one of, for example, a capacitive type, a resistive type, an IR type, and an ultrasonic type. The touch panel 252 may further include a control circuit. The touch panel 252 may further include a tactile layer and provide a tactile reaction to the user.

The (digital) pen sensor 254 may include, for example, a recognition sheet which is a part of the touch panel or is separated from the touch panel. The key 256 may include, for example, a physical button, an optical key, or a keypad. The ultrasonic input device 258 may detect an acoustic wave using a microphone (for example, the microphone 288) of the electronic device 200 through an input tool generating an ultrasonic signal to identify data.

The display 260 (for example, the display 160) may include a panel 262, a hologram device 264, or a projector 266. The panel 262 may include a configuration identical or similar to that of the display 160 illustrated in FIG. 1. The panel 262 may be implemented to be, for example, flexible, transparent, or wearable. The panel 262 may be formed as a single module together with the touch panel 252. The hologram device 264 may project a three dimensional image in the air by using an interference of light. The projector 266 may display an image by projecting light onto a screen. The screen may be located, for example, in the interior of or on the exterior of the electronic device 200. According to an embodiment of the present disclosure, the display 260 may further include a control circuit for controlling the panel 262, the hologram device 264, or the projector 266.

The interface 270 may include, for example, an HDMI 272, a USB 274, an optical interface 276, or a D-subminiature (D-sub) 278. The interface 270 may be included in, for example, the communication interface 170 illustrated in FIG. 1. Additionally or alternatively, the interface 270 may include, for example, a mobile high-definition link (MHL) interface, an SD card/multi-media card (MMC) interface, or an infrared data association (IrDA) standard interface.

The audio module 280 may bilaterally convert, for example, a sound and an electrical signal. At least some components of the audio module 280 may be included in, for example, the input/output interface 150 illustrated in FIG. 1. The audio module 280 may process sound information input or output through, for example, a speaker 282, a receiver 284, earphones 286, or the microphone 288.

The camera module 291 is a device which may photograph a still image and a dynamic image. According to an embodiment of the present disclosure, the camera module 291 may include one or more image sensors (for example, a front sensor or a back sensor), a lens, an image signal processor (ISP) or a flash (for example, LED or xenon lamp).

The power management module 295 may manage, for example, power of the electronic device 200. According to an embodiment of the present disclosure, the power management module 295 may include a power management IC (PMIC), a charger IC, or a battery or fuel gauge. The PMIC may use a wired and/or wireless charging method. Examples of the wireless charging method may include, for example, a magnetic resonance method, a magnetic induction method, an electromagnetic method, and the like. Additional circuits (e.g., a coil loop, a resonance circuit, a rectifier, etc.) for wireless charging may be further included. The battery gauge may measure, for example, a residual quantity of the battery 296, and a voltage, a current, or a temperature while charging. The battery 296 may include, for example, a rechargeable battery or a solar battery.

The indicator 297 may display a predetermined state of the electronic device 200 or a part of the electronic device 210 (for example, the AP 210), such as a booting state, a message state, a charging state, or the like. The motor 298 may convert an electrical signal into a mechanical vibration, and may generate a vibration, a haptic effect, or the like. Although not illustrated, the electronic device 200 may include a processing device (for example, a GPU) for supporting mobile TV. The processing device for supporting a mobile TV can process media data according to a standard of digital multimedia broadcasting (DMB), digital video broadcasting (DVB), mediaFLO^{™}, or the like.

Each of the components of the electronic device according to the present disclosure may be implemented by one or more components and the name of the corresponding component may vary depending on a type of the electronic device. In various embodiments of the present disclosure, the electronic device may include at least one of the above-described elements. Some of the above-described elements may be omitted from the electronic device, or the electronic device may further include additional elements. Further, some of the components of the electronic device according to the various embodiments of the present disclosure may be combined to form a single entity, and thus, may equivalently execute functions of the corresponding elements prior to the combination.

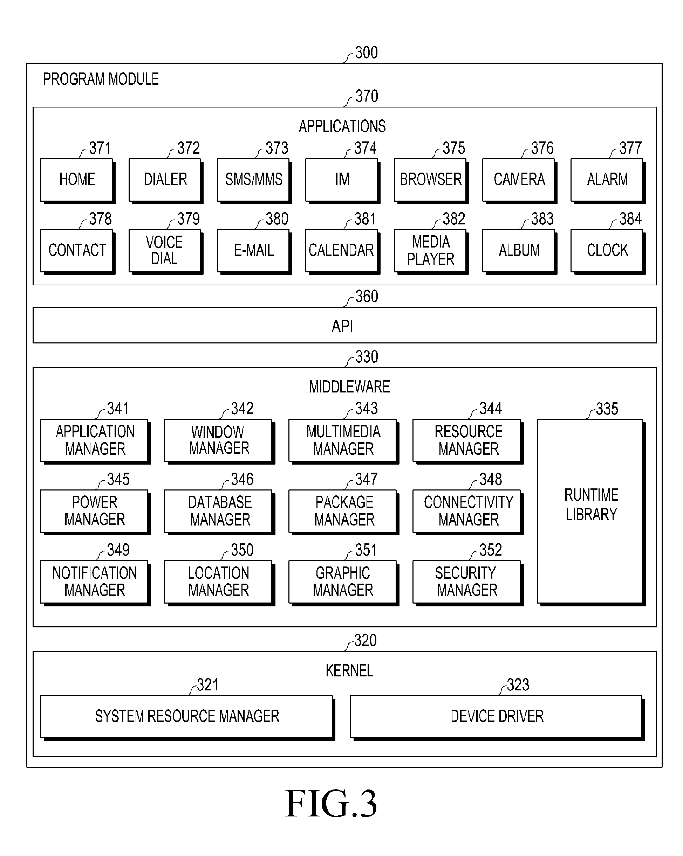

FIG. 3 is a block diagram of a program module according to various embodiments of the present disclosure.

Referring to FIG. 3, according to an embodiment of the present disclosure, a program module 300 (for example, the program 140) may include an OS for controlling resources related to the electronic device (for example, the electronic device 101) and/or various applications (for example, the application program 147) executed in the OS. The OS may be, for example, Android, iOS, Windows, Symbian, Tizen, Bada, or the like.

The program module 300 may include a kernel 320, a middleware 330, an API 360, and/or applications 370. At least some of the program module 300 may be preloaded in the electronic device (for example, the electronic device 101) or downloaded in the server (for example, the server 106).

The kernel 320 (for example, the kernel 141) may include, for example, a system resource manager 321 or a device driver 323. The system resource manager 321 may perform control, allocation, retrieval, or the like of system resources. According to an embodiment of the present disclosure, the system resource manager 321 may include a process manager, a memory manager, a file system manager, or the like. The device driver 323 may include, for example, a display driver, a camera driver, a BT driver, a shared memory driver, a USB driver, a keypad driver, a Wi-Fi driver, an audio driver, or an inter-process communication (IPC) driver.

The middleware 330 may provide a function required by the applications 370 in common or provide various functions to the applications 370 through the API 360 so that the applications 370 can efficiently use limited system resources within the electronic device. According to an embodiment of the present disclosure, the middleware 330 (for example, the middleware 143) may include at least one of a runtime library 335, an application manager 341, a window manager 342, a multimedia manager 343, a resource manager 344, a power manager 345, a database manager 346, a package manager 347, a connectivity manager 348, a notification manager 349, a location manager 350, a graphic manager 351, and a security manager 352.

The runtime library 335 may include a library module that a compiler uses in order to add a new function through a programming language while an application 370 is being executed. The runtime library 335 may perform input/output management, memory management, the functionality for an arithmetic function, or the like.

The application manager 341 may manage, for example, a life cycle of at least one of the applications 370. The window manager 342 can manage graphical user interface (GUI) resources used by a screen. The multimedia manager 343 may detect formats required for reproduction of various media files, and may perform encoding or decoding of a media file by using a codec suitable for the corresponding format. The resource manager 344 can manage resources such as a source code, a memory, and a storage space of at least one of the applications 370.

The power manager 345 may operate together with a basic input/output system (BIOS) to manage a battery or power and may provide power information required for the operation of the electronic device. The database manager 346 may generate, search for, or change a database to be used by at least one of the applications 370. The package manager 347 can manage an installation or an update of an application distributed in the form of a package file.

The connectivity manager 348 may manage wireless connectivity such as Wi-Fi or BT. The notification manager 349 may display or notify of an event such as an arrival message, a promise, a proximity notification, and the like in such a way that does not disturb a user. The location manager 350 may manage location information of an electronic device. The graphic manager 351 may manage a graphic effect which will be provided to a user, or a user interface related to the graphic effect. The security manager 352 may provide all security functions required for system security or user authentication. According to an embodiment of the present disclosure, when the electronic device (for example, the electronic device 101) has a telephone call function, the middleware 330 may further include a telephony manager for managing a voice call function or a video call function of the electronic device.

The middleware 330 may include a middleware module that forms a combination of various functions of the above-described elements. The middleware 330 may provide a module specialized for each type of OS in order to provide a differentiated function. Further, the middleware 330 may dynamically remove some of the existing components or add new components.

The API 360 (for example, the API 145) is, for example, a set of API programming functions, and may be provided with a different configuration according to an OS. For example, in the case of Android or iOS, one API set may be provided for each platform. In the case of Tizen, two or more API sets may be provided for each platform.

The applications 370 (for example, the applications 147) may include one or more of a home application 371, a dialer 372, a short message service (SMS)/multimedia message service (MMS) application 373, an instant message (IM) application 374, a browser application 375, a camera application 376, an alarm application 377, a contact application 378, a voice dial application 379, an e-mail application 380, a calendar application 381, a media player application 382, an album application 383, a clock application 384, a health care application (for example, an application for measuring a work rate or blood sugar), and an environmental information application (for example, an application for providing atmospheric pressure, humidity, or temperature information).

According to an embodiment of the present disclosure, the applications 370 may include an application (hereinafter, referred to as an "information exchange application" for convenience of the description) supporting information exchange between the electronic device (for example, the electronic device 101) and an external electronic device (for example, the first external electronic device 102 or the second external electronic device 104). Examples of the information exchange application may include a notification relay application for delivering particular information to an external electronic device and a device management application for managing an external electronic device.

For example, the notification relay application may include a function of transferring, to the external electronic device (for example, the first external electronic device 102 or the second external electronic device 104), notification information generated from the other applications of the electronic device (for example, the SMS/MMS application, the e-mail application, the health management application, and the environmental information application). Also, for example, the notification relay application may receive notification information from the external electronic device and may provide the received notification information to the user.

The device management application may manage (for example, install, delete, or update), for example, a function for at least a part of the external electronic device communicating with the electronic device (for example, turning on/off the external electronic device itself (or some elements thereof) or adjusting brightness (or resolution) of a display), applications executed in the external electronic device, or services provided from the external electronic device (for example, a telephone call service or a message service).

According to an embodiment of the present disclosure, the applications 370 may include an application (for example, a health management application) specified according to attributes (for example, attributes of the electronic device such as the type of electronic device which corresponds to a mobile medical device) of the external electronic device (for example, the first external electronic device 102 or the second external electronic device 104). According to an embodiment of the present disclosure, the applications 370 may include an application received from the external electronic device (for example, the server 106, the first external electronic device 102, or the second external electronic device 104). According to an embodiment of the present disclosure, the application 370 may include a preloaded application or a third party application which can be downloaded from the server. Names of the elements of the program module 300, according to the above-described embodiments of the present disclosure, may change depending on the type of OS.

According to various embodiments of the present disclosure, at least a part of the programming module 300 may be implemented in software, firmware, hardware, or a combination of two or more thereof. At least a portion of the programming module 300 may, for example, be implemented (e.g., executed) by a processor (e.g., the AP 210). At least some of the program module 300 may include, for example, a module, a program, a routine, a set of instructions, and/or a process for performing one or more functions.

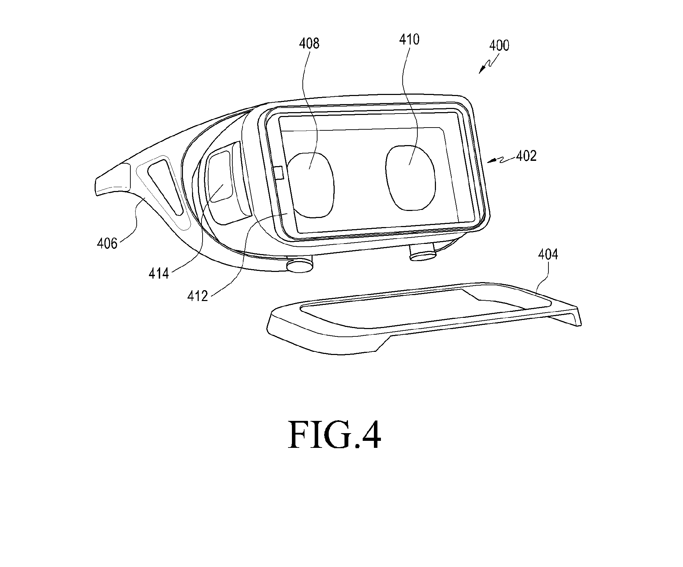

FIG. 4 is a perspective view illustrating an example of a head mounted electronic device according to various embodiments of the present disclosure.

Referring to FIG. 4, a head mounted electronic device 400 may be, for example, the first external electronic device 102 of FIG. 1. The head mounted electronic device 400 may include a body 402 and a cover 404. The body 402 may include a support 406, two lenses 408 and 410, a coupling unit 412, and a control unit 414.

For example, the electronic device 101 of FIG. 1 may be coupled to the head mounted electronic device 400. For example, when the electronic device 101 is coupled to the head mounted electronic device 400, the cover 404 may cover a rear edge of the electronic device 101 to be fixed to the head mounted electronic device 400 in order to maintain the coupling state. The support 406 may be a member which can be used when the user mounts the head mounted electronic device 400 on the head. The lenses 408 and 410 may be installed in locations respectively corresponding to the user's eyes. Each of the lenses 408 and 410 may include at least one lens. Each of the lenses 408 and 410 may be a lens including a plurality of lenses, such as a micro array lens or a liquid lens. The user may see the screen (for example, the screen provided through the display 160 of the electronic device 101) through the lenses 408 and 410. The coupling unit 412 may be a mechanical structure, which can couple the electronic device 101 to the head mounted electronic device 400, for example, to be attachable to and detachable from the electronic device 101.

The control unit 414 may be installed in the side of the body 402. The control unit 414 may be used for an input for controlling the head mounted electronic device 400 by the user. For example, the control unit 414 may include at least one of a touch panel, a button, a wheel key, and a touch pad. The touch panel may receive a touch input by the user. The touch input may be a direct touch input on the touch panel or a hovering input approaching the touch panel. The head mounted electronic device 400 may be connected to the electronic device 101 through a communication interface (for example, a USB) to transmit an input received through the control unit to the electronic device 101. The electronic device 101 may control a function corresponding to the input in response to the input received through the control unit 414 of the head mounted electronic device 400. For example, the electronic device 101 may control a volume or an image reproduction in response to the received input.

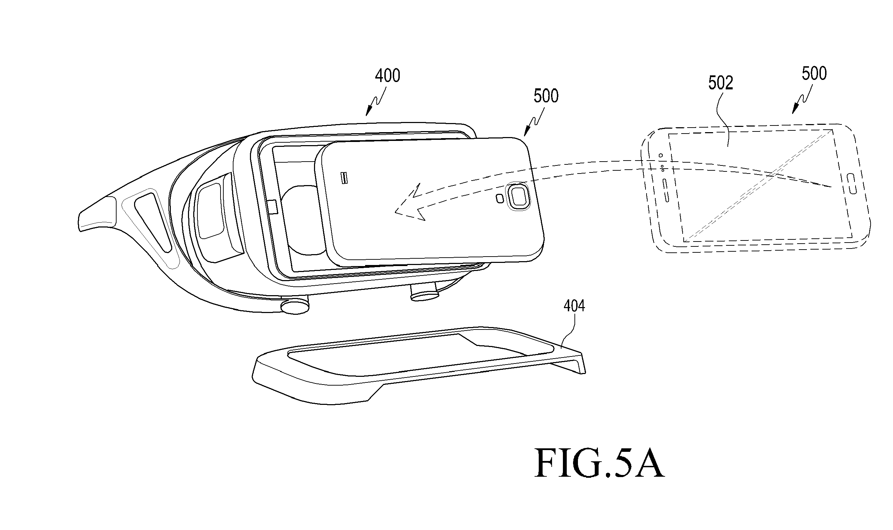

FIG. 5A is a perspective view illustrating an example in which electronic devices are coupled according to various embodiments of the present disclosure.

Referring to FIG. 5A, the electronic device 400 may be, for example, the head mounted electronic device 400 of FIG. 4, and the electronic device 500 may be, for example, the electronic device 101 of FIG. 1.

The electronic device 500 may be coupled to the coupling unit (for example, the coupling unit 412 of FIG. 4) of the electronic device 400 such that the front surface in which a display 502 is installed faces the lenses (for example, the lenses 408 and 410 of FIG. 4) of the electronic device 400. The electronic device 500 may be covered with the cover 404 to be fixed to the electronic device 400. The display 502 may include displays corresponding to the number of physical lenses (the lenses 408 and 410 of FIG. 4) or divide a single display screen into screens corresponding to the number of logical lenses and display the screens.

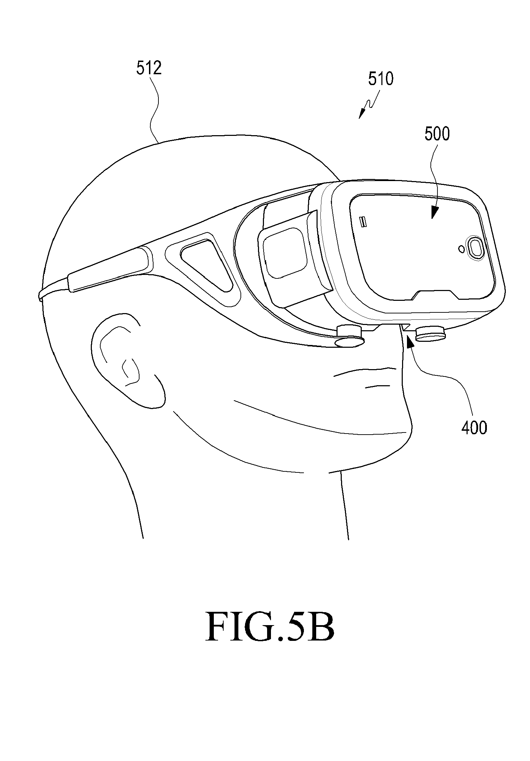

FIG. 5B is a perspective view illustrating an example in which a user wears an electronic device in which the electronic devices are coupled according to various embodiments of the present disclosure.

Referring to FIG. 5B, a user 512 may wear an electronic device 510 in which the electronic devices 400 and 500 are coupled on the head. The user 512 may see a screen generated according to an image displayed on the display 502 of the electronic device 500 through lenses of the electronic device 400 (for example, the lenses 408 and 410 of FIG. 4).

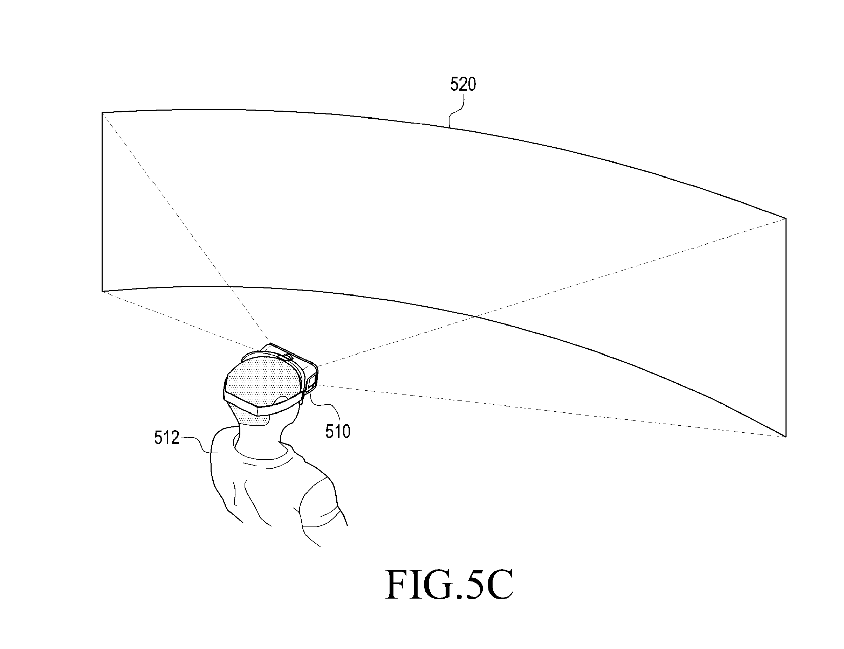

FIG. 5C is a perspective view illustrating an example in which a screen is provided to a user wearing an electronic device in which electronic devices are coupled according to various embodiments of the present disclosure.

Referring to FIG. 5C, the user 512 wearing the coupled electronic device 510 may see a screen 520 through the coupled electronic device 510. The screen 520 may be a virtual screen.

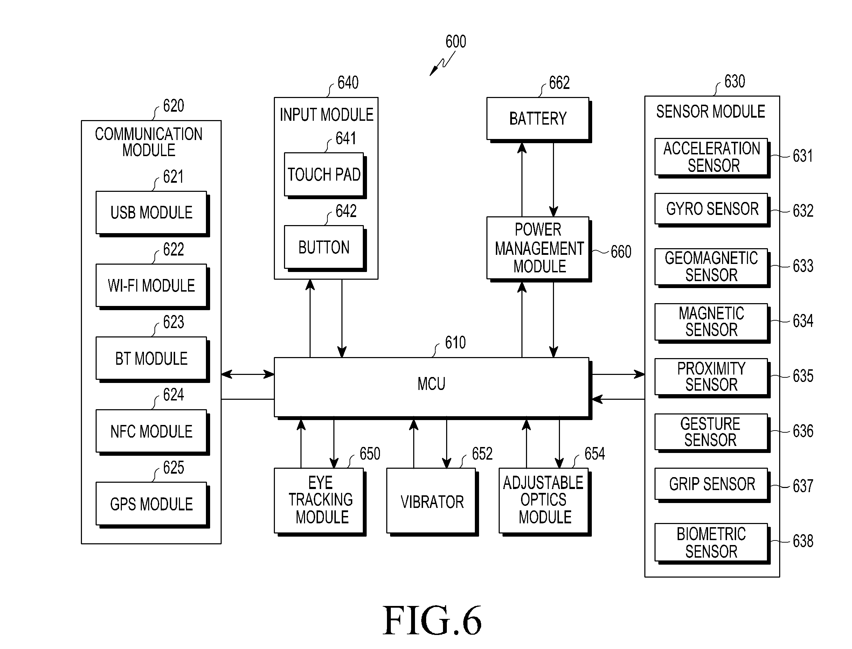

FIG. 6 is a block diagram illustrating an example of a configuration of a head mounted electronic device according to various embodiments of the present disclosure.

Referring to FIG. 6, a head mounted electronic device 600 may be, for example, the head mounted electronic device 400 of FIG. 4. The head mounted electronic device 600 may include a micro controller unit (MCU) 610, a communication module 620, a sensor module 630, an input module 640, an eye tracking module 650, a vibrator 652, an adjustable optics module 654, a power management module 660, and a battery 662.

The MCU 610 may control other elements (for example, the communication module 620, the sensor module 630, the input module 640, the eye tracking module 650, the vibrator 652, the adjustable optics module 654, and the power management module 660) by driving an OS or an embedded software program. The MCU 610 may be called a controller, may include the controller as a part thereof, or constitute a part of the controller. The MCU 610 may include at least one processor. The MCU 610 may further include a memory.

The communication module 620 may electrically connect the head mounted electronic device 600 to, for example, the electronic device 500 of FIGS. 5A and 5B through wired communication or wireless communication to perform data transmission and reception therebetween. According to an embodiment of the present disclosure, the communication module 620 may include a USB module 621, a Wi-Fi module 622, a BT module 623, an NFC module 624, and a GPS module 625. According to an embodiment of the present disclosure, at least two of the USB module 621, the Wi-Fi module 622, the BT module 623, the NFC module 624, and the GPS module 625 may be included within one IC or IC package.

The sensor module 630 may measure a physical quantity or sense an operational state of the head mounted electronic device 600 and may convert the measured or sensed information to an electrical signal. The sensor module 630 may include at least one of, for example, an acceleration sensor 631, a gyro sensor 632, a geomagnetic sensor 633, a magnetic sensor 634, a proximity sensor 635, a gesture sensor 636, a grip sensor 637, and a biometric sensor 638. The head mounted electronic device 600 may detect movement of the user's head wearing the head mounted electronic device 600 by using at least one of the acceleration sensor 631, the gyro sensor 632, and the geomagnetic sensor 633.

The head mounted electronic device 600 may detect whether the head mounted electronic device 600 is worn by using the proximity sensor 635 or the grip sensor 637. According to an embodiment of the present disclosure, the head mounted electronic device 600 may detect whether the user wears the head mounted electronic device 600 by detecting at least one of IR recognition, pressure recognition, and a change in capacitance (or dielectric constant) according to the wearing of the head mounted electronic device 600 by the user. The gesture sensor 636 may detect movement of a user's hand or finger and receive the movement as an input operation of the head mounted electronic device 600. Additionally or alternatively, the sensor module 630 may include, for example, a biometric recognition sensor such as an E-nose sensor, an EMG sensor, an EEG sensor, an ECG sensor, an iris sensor, and a fingerprint sensor, and may recognize user's biometric information by using the biometric recognition sensor. The sensor module 630 may further include a control circuit for controlling one or more sensors included therein.

The input module 640 may be, for example, the control unit 414 of FIG. 4. The input module 640 may receive an input from the user. The input module 640 may include a touch pad 641 and a button 642. The touch pad 641 may recognize a touch input in at least one of, for example, a capacitive type, a resistive type, an IR type, and an ultrasonic wave type. The touch pad 641 may further include a control circuit. A capacitive touch pad may recognize a physical contact or proximity. The touch pad 641 may further include a tactile layer. In this case, the touch pad 641 may provide a user with a tactile reaction. The key 642 may include, for example, a physical button, an optical key, or a keypad.

The power management module 660 may manage power of the head mounted electronic device 600. Although not illustrated, the power management module 660 may include, for example, a PMIC, a charger IC, or a battery gauge. The PMIC may use a wired and/or wireless charging method. Examples of the wireless charging method may include, for example, a magnetic resonance method, a magnetic induction method, an electromagnetic method, and the like. Additional circuits (for example, a coil loop, a resonance circuit, a rectifier, etc.) for wireless charging may be further included. The battery gauge may measure, for example, a residual quantity of the battery 662, and a voltage, a current, or a temperature while charging. The battery 662 may include, for example, a rechargeable battery or a solar battery.

The eye tracking module 650 may track a user's line of sight by using at least one type of, for example, an electrical oculography (EOG) sensor, a coil system, a dual purkinje system, a bright pupil system, and a dark pupil system. Further, the eye tracking module 650 may further include a micro camera for tracking the user's line of sight.

The adjustable optics module 654 may measure an inter-pupil distance (IPD) of the user to allow the user to view an image suitable for the user's eye sight. The head mounted electronic device 600 may adjust a distance between lenses according to the IPD of the user measured through the adjustable optics module 654. The head mounted electronic device 600 may transmit the IPD of the user measured through the adjustable optics module 654 to the electronic device 500 and control a display location of the screen through the display 502 of the electronic device 500.

When the head mounted electronic device 600 moves, the MCU 610 may transfer a value of the movement detected through a motion sensor of the sensor module 630 to the electronic device 500. The motion sensor may be at least one of the acceleration sensor 631, the gyro sensor 632, and the geomagnetic sensor 633.

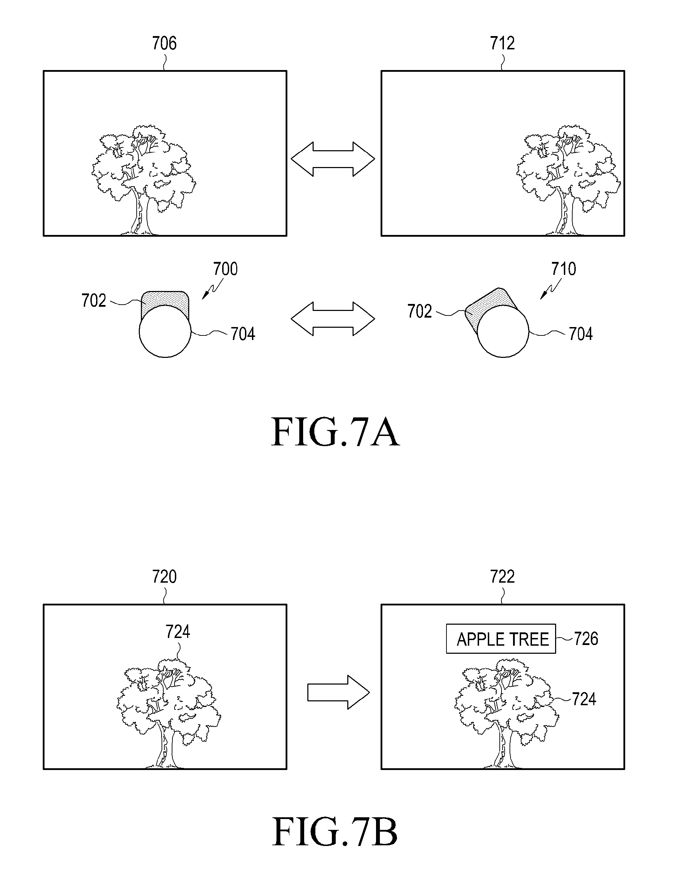

FIG. 7A illustrates an example in which an image of a view changed in accordance with a change in a user's viewpoint according to movement of the user's head is displayed according to various embodiments of the present disclosure.

Referring to FIG. 7A, a user 704 may wear an electronic device 702 on their head. The electronic device 702 may be, for example, the coupled electronic device 510 of FIG. 5. When the user 704 wearing the electronic device 702 moves their head, the electronic device 400 of the coupled electronic device 510 may detect the movement. The electronic device 400 may transfer a value of the detected movement to the electronic device 500. The electronic device 500 may display the image of the view changed in accordance with the changed viewpoint of the user 704 based on the value of the movement of the electronic device 400. The electronic device 500 may transmit the value of the movement of the electronic device 400 to the server (for example, the server 106 of FIG. 1) and receive the image of the view changed in accordance with the changed viewpoint of the user 704.

For example, when the user 704 sees the center of a screen 706 as indicated by reference numeral 700 and then turns their head left as indicated by reference numeral 710, the electronic device 500 may shift the image right in accordance with the changed viewpoint of the user 704 according to the movement of the head of the user 704 and display the image of the changed view as shown in a screen 712. For example, when the user 704 sees the left side of the screen 712 as indicated by reference numeral 710 and then turns the head toward the center as indicated by reference numeral 700, the electronic device 500 may shift the image left in accordance with the changed viewpoint of the user 704 according to the movement of the head of the user 704 and display the image of the changed view as shown in the screen 706.

FIG. 7B illustrates an example in which information on an object in an image is additionally displayed according to various embodiments of the present disclosure.

Referring to FIG. 7B, when an object 724 is displayed as shown in a screen 720, the electronic device 500 may additionally display information 726 related to the object 724 as shown in a screen 722. The information on the object may be added by the server (for example, the server 106 of FIG. 1) or the electronic device 500.

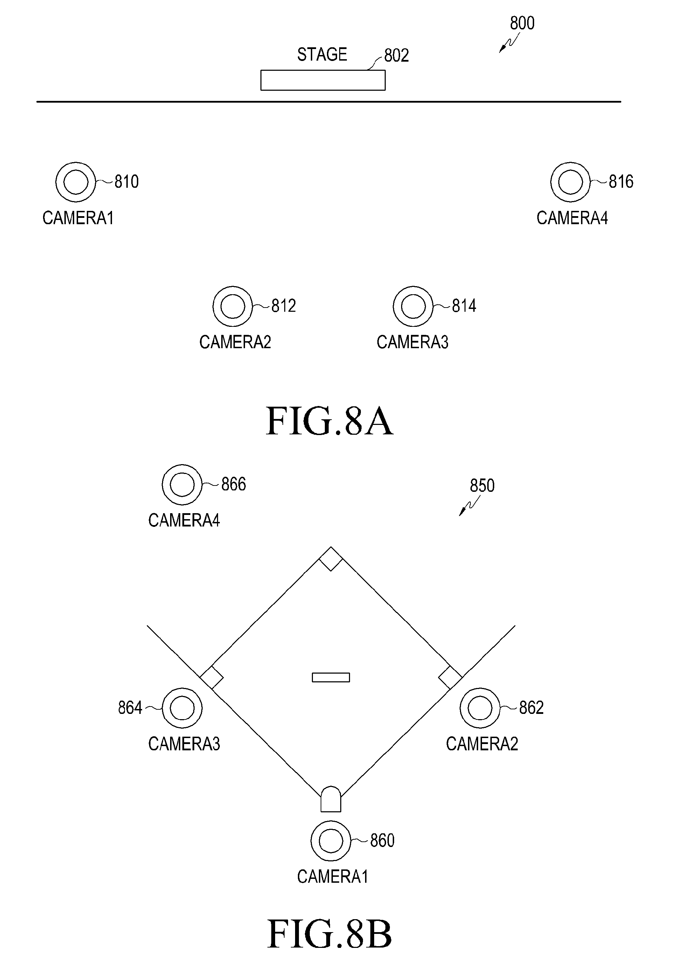

FIGS. 8A and 8B illustrate examples in which a plurality of photographing devices are arranged in different locations within a specified area according to various embodiments of the present disclosure.

FIG. 8A illustrates an example in which a plurality of photographing devices are arranged in a location for performances 800.

Referring to FIG. 8A, four cameras 810 to 816 may be arranged in the performing place 800. The cameras 810, 812, 814, and 816 may be arranged in different locations in front of a stage 802. The number of cameras 810 to 816 and locations of the cameras 810 to 816 illustrated in FIG. 8A are only an example and may vary in any degree. The cameras 810 to 816 may be omnidirectional photographing devices.

FIG. 8B illustrates an example in which a plurality of photographing devices are arranged in a baseball stadium 850.

Referring to FIG. 8B, four cameras 860, 862, 864, and 866 may be arranged in the baseball stadium 850. Three cameras 860 to 864 may be arranged near a home base, a first base, and a third base, and one camera 866 may be arranged in the outfield. The number of cameras 860 to 866 and locations of the cameras 810 to 816 illustrated in FIG. 8B are only an example and may vary in any degree. The cameras 860 to 866 may be omnidirectional photographing devices.

Each of the omnidirectional photographing devices such as the cameras 810 to 816 of FIG. 8A or the cameras 860 to 866 of FIG. 8B may include two or more photographing modules or two or more cameras implemented to perform photographing in different directions and may simultaneously photograph the photographing place in all directions including top, bottom, front, rear, left, and right directions. Each photographing module may include a separate lens and an image sensor.

An image photographed by each of the plurality of omnidirectional photographing devices such as the cameras 810 to 816 of FIG. 8A or the cameras 860 to 866 of FIG. 8B may be transmitted to the server (for example, the server 106 of FIG. 1). The server may receive images from the plurality of omnidirectional photographing devices and provide an image photographed by the photographing device selected from the electronic device (for example, the electronic device 500 of the coupled electronic device 510 of FIG. 5B) to the electronic device. The processing of dividing the image photographed by the selected photographing device according to the number of a plurality of physical or logical displays (for example, the display 502 of FIG. 5B) may be performed by the electronic device or the server.

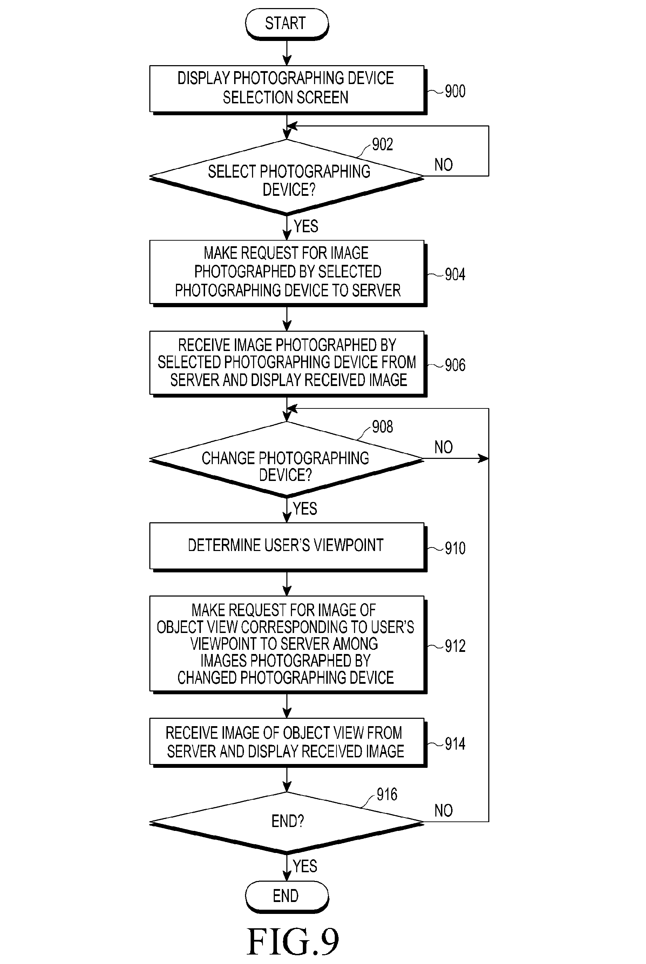

FIG. 9 is a flowchart illustrating a display method of an electronic device according to various embodiments of the present disclosure.

Referring to FIG. 9, the electronic device (for example, the electronic device 500 of the coupled electronic device 510 of FIG. 5B) may display a photographing device selection screen in operation 900. The electronic device may display the photographing device selection screen in response to a user input specified to activate the photographing device selection screen. For example, the user input may be input into the electronic device through at least one input method among a menu selection, an icon touch, and a button input.

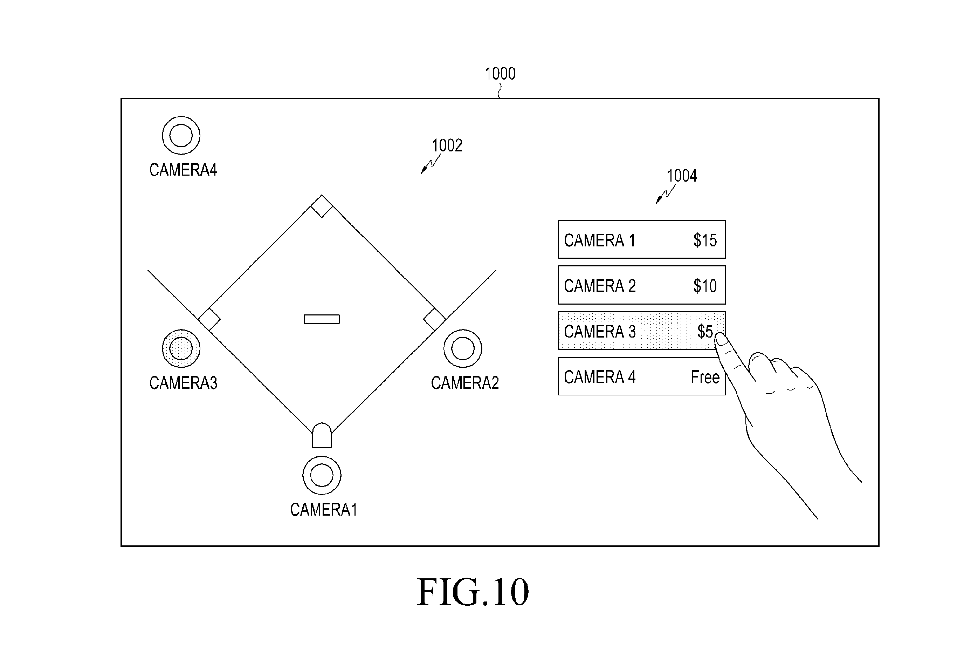

FIG. 10 illustrates an example of a photographing device selection screen according to various embodiments of the present disclosure.

Referring to FIG. 10, a photographing device selection screen 1000 may include arrangement information 1002 and a selection list 1004. The arrangement information 1002 may indicate locations of cameras 1, 2, 3, and 4 arranged in different locations within a specified area (for example, a baseball stadium). Cameras 1 to 4 may be omnidirectional photographing devices. The selection list 1004 may include a list of cameras 1 to 4 and utilization fee information on an image photographed by each of cameras 1 to 4. Utilization fees of the images photographed by cameras 1 to 4 may be differently defined. The user may select a camera arranged in a location in which the user desires to see a game from cameras 1 to 4 arranged in different locations in a baseball stadium. The electronic device may display the cameras such that the camera selected by the user is distinguished from the cameras which are not selected. For example, when camera 3 is selected, the electronic device may shade camera 3 as illustrated in FIG. 10.

Referring to FIG. 9, in operation 902, the electronic device may determine whether the photographing device is selected by the user. When one photographing device is selected by the user from the photographing devices included in the selection list 1004 displayed through the photographing device selection screen 1000, the electronic device may make a request for an image photographed by the selected photographing device to the server (for example, the server 106 of FIG. 1) in operation 904. In operation 904, the electronic device may perform charging processing for the utilization fee of the selected photographing device through the server.

In operation 906, the electronic device may receive the image photographed by the selected photographing device from the server and display the received image. The image received from the server in operation 906 may start from a default view specified to the selected photographing device.

The omnidirectional photographing device may simultaneously photograph the photographing place in all directions unlike a general two dimensional (2D) photographing device, but the user wearing the head mounted electronic device 400 can see only some directions. Therefore, it may be unclear which part of the image photographed by the omnidirectional photographing device should be shown to the user. According to an embodiment of the present disclosure, a default view may be specified to each of the omnidirectional photographing devices. The server stores information on the default view of each of the omnidirectional photographing devices. When one of the omnidirectional photographing devices is selected, the server may transmit an image starting from the default view specified to the selected photographing device among the images photographed by the selected photographing device.

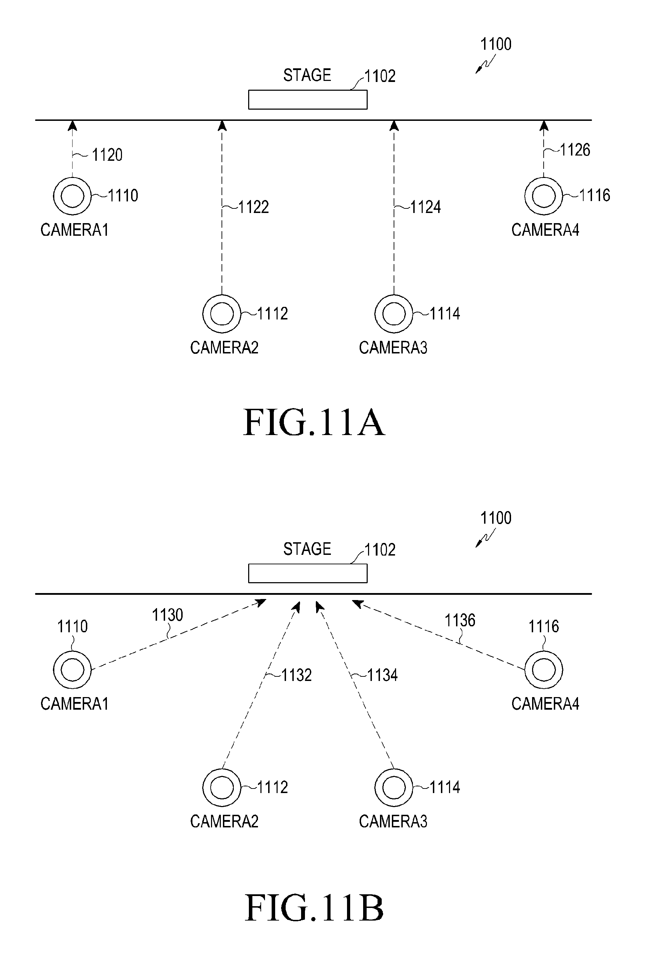

FIGS. 11A and 11B illustrate examples of a default view according to various embodiments of the present disclosure.

FIG. 11A illustrates an example of the default view when a plurality of photographing devices are arranged in a location for performances 1100.

Referring to FIG. 11A, for example, default views of four cameras 1110, 1112, 1114, and 1116 arranged within the location for performances 1100 may be respectively specified in directions 1120, 1122, 1124, and 1126 perpendicular to a stage 1102 toward the stage 1102.

FIG. 11B illustrates another example of the default view when a plurality of photographing devices are arranged in a location for performances 1100.

Referring to FIG. 11B, for example, default views of four cameras 1110 to 1116 arranged within the location for performances 1100 may be respectively specified in directions 1130, 1132, 1134, and 1136 toward the stage 1102.

While seeing an image photographed by one photographing device, the user may see a different image photographed by another photographing device. The user may change the photographing device, which photographs the image that the user currently sees through the photographing device selection screen 1000 of FIG. 10, into the other photographing device and see the image photographed by the changed photographing device.

Referring back to FIG. 9, when there is a user input specified to activate the photographing device selection screen, the electronic device may display the photographing device selection screen 1000 of FIG. 10 in operation 906. The user may select another photographing device other than the currently selected photographing device through the photographing device selection screen 1000.

In operation 908, the electronic device may determine whether the photographing device is changed by the user. When another photographing device other than the current selected photographing device is selected by the user and thus the photographing device should be changed, the electronic device may determine a user's viewpoint viewing the currently displayed image in operation 910. In operation 912, the electronic device may make a request for an image of an object view in which an object corresponding to the user's viewpoint is photographed to the server among the images photographed by the changed photographing device. In operation 912, the electronic device may perform charging processing for the utilization fee of the selected photographing device through the server. In operation 914, the electronic device may receive the image of the object view from the server and display the received image.

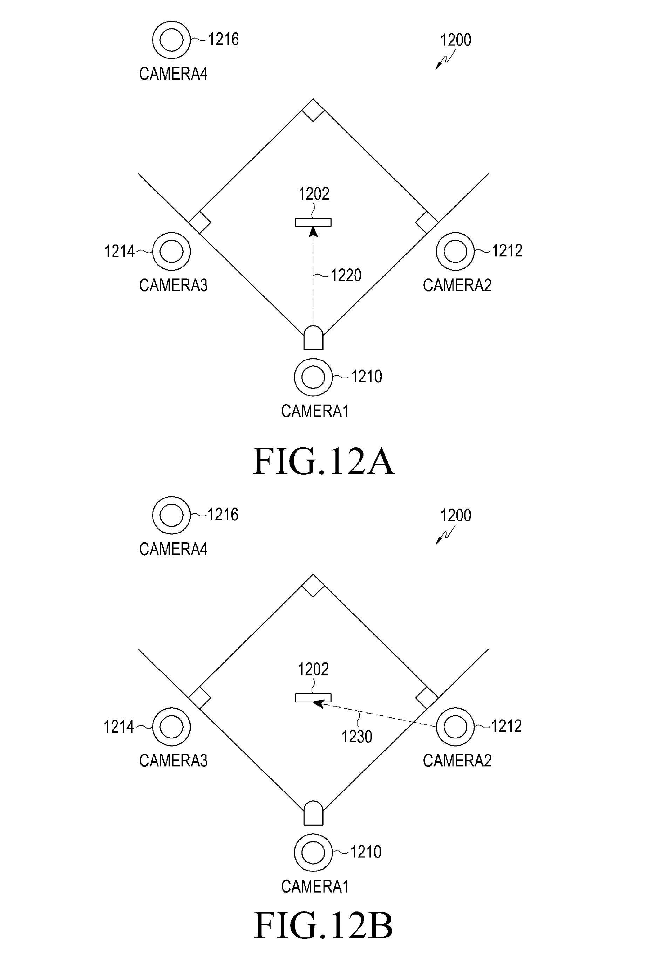

FIGS. 12A and 12B illustrate examples of changing a photographing device according to various embodiments of the present disclosure.

Referring to FIGS. 12A and 12B, for example, while seeing an image photographed in a direction 1220 toward an object 1202 among images photographed by cameral 1210 by selecting cameral 1210 from four cameras 1210, 1212, 1214, and 1216 arranged within a baseball stadium 1200, the user may change the photographing device by selecting camera2 1212, which is different from cameral 1210, as illustrated in FIG. 12B. When the user selects camera2 1212, the electronic device may display an image of an object view 1230 in which the object 1202 which the user sees is photographed among images photographed by camera2 1212.

Accordingly, even when the user selects another photographing device while the user sees the image photographed by one photographing device among a plurality of photographing devices arranged in different locations within a specified area, the user may successively see an object corresponding to a user's viewpoint before the change through the image photographed by the changed photographing device.

The electronic device may determine the user's viewpoint viewing the currently displayed image in operation 910, and transmit viewpoint information on the user's viewpoint to the server in operation 912. The user's viewpoint may be determined in various ways.

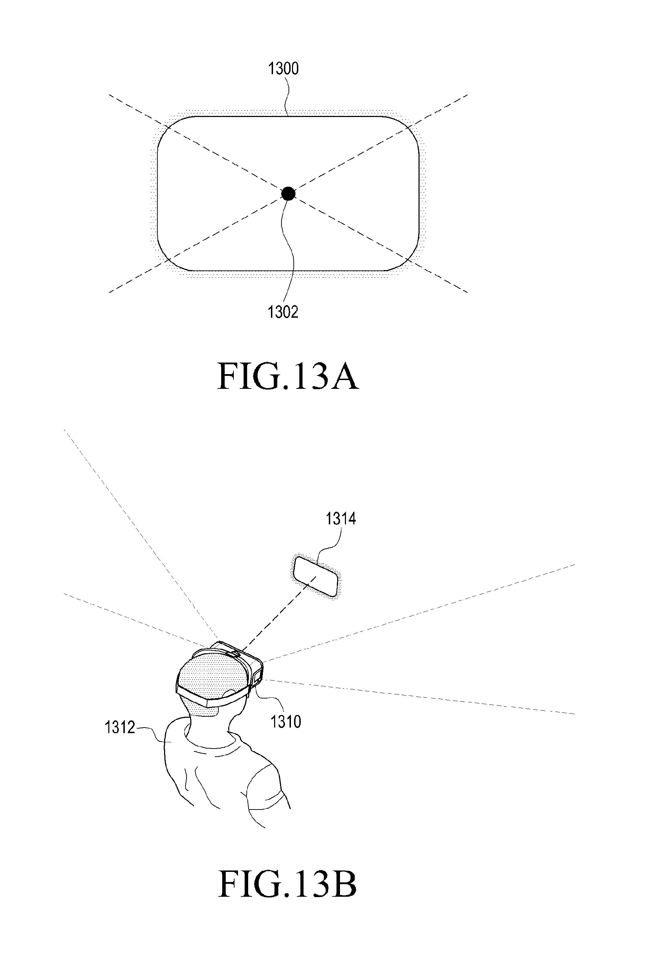

FIGS. 13A and 13B illustrate examples of determining a user's viewpoint according to various embodiments of the present disclosure.

Referring to FIG. 13A, according to an embodiment of the present disclosure, the electronic device may calculate a center point 1302 of a screen 1300 displaying an image and determine the calculated center point 1302 as the user's viewpoint.

Referring to FIG. 13B, according to an embodiment of the present disclosure, the electronic device may track a location of an object 1314 which the user 1312 currently sees by tracking movement of pupils of the user. For example, the electronic device 1310 may track the user's line of sight according to the movement of the pupils of the user through the eye tracking module 650 of the head mounted electronic device of FIG. 6. The electronic device may determine the location of the user's pupils as the user's viewpoint.

Referring back to FIG. 9, in operation 906 or 914, when the electronic device 702 moves according to movement of the user 704, the electronic device may display an image of a view changed in accordance with a changed viewpoint of the user 704 based on a value of the movement detected by electronic device 400 as described with reference to FIG. 7A. The electronic device may receive the image of the view changed in accordance with the changed viewpoint of the user 704 from the server and display the received image. The electronic device 500 may transmit the value of the movement of the electronic device 400 to the server and receive the image of the view changed in accordance with the changed viewpoint of the user 704 from the server. In operation 906 or 914, the electronic device may additionally display information on an object of the display image as described with reference to FIG. 7B.

In operation 916, the electronic device may determine whether displaying of the image ends or not. When there is a user input indicating the end, the electronic device may notify the server of the end of image transmission and may end the displaying of the image. When there is no user input indicating the end, the electronic device may return to operation 908.

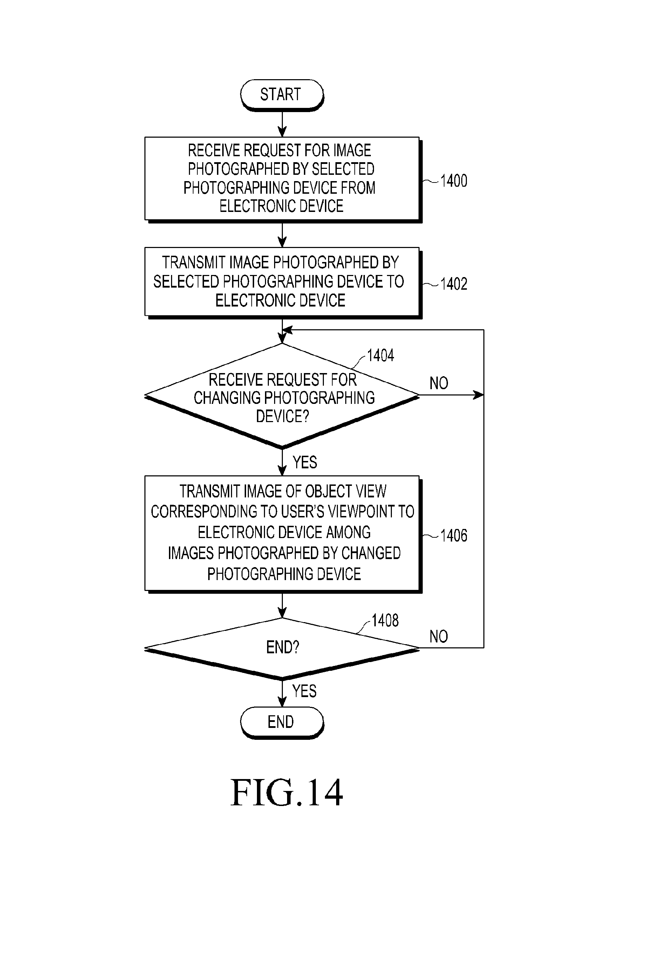

FIG. 14 is a flowchart illustrating an example of a method of providing an image to an electronic device by a server according to various embodiments of the present disclosure.

Referring to FIG. 14, in operation 1400, the server (for example, the server 106 of FIG. 1) may receive a request for an image photographed by a photographing device selected by the user among a plurality of photographing devices from the electronic device (for example, the electronic device 500 of the coupled electronic device 510 of FIG. 5B).

In operation 1402, the server may transmit the image photographed by the photographing device selected by the user to the electronic device. In operation 1402, the server may perform charging processing for the utilization fee of the selected photographing device. In operation 1402, the server may transmit an image starting from a default view specified to the selected photographing device to the electronic device among the images photographed by the selected photographing device.

In operation 1404, the server may determine whether a request for changing the photographing device is received from the electronic device. The request for changing the photographing device may be a request, by the user, for the image of the view of the object corresponding to the user's viewpoint among the images photographed by the changed photographing device as described above. The request for changing the photographing device may include viewpoint information on the user's viewpoint. When the request for changing the photographing device is received from the electronic device, the server may transmit the image of the object view corresponding to the user's viewpoint to the electronic device among the images photographed by the changed photographing device in operation 1406. In operation 1406, the server may perform charging processing for the utilization fee of the changed photographing device.

In operation 1402 or 1406, the server may receive a movement value according to movement of the user from the electronic device and transmit an image of the view changed in accordance with the changed user's viewpoint to the electronic device. In operation 1402 or 1406, the server may add information on an object included in the image transmitted to the electronic device.

In operation 1408, the server may determine whether to end image transmission to the electronic device. When the server is notified of the end of the image transmission from the electronic device, the server may end the transmitting of the image to the electronic device. When the server is not notified of the end of the image transmission from the electronic device, the server may return to operation 1404.

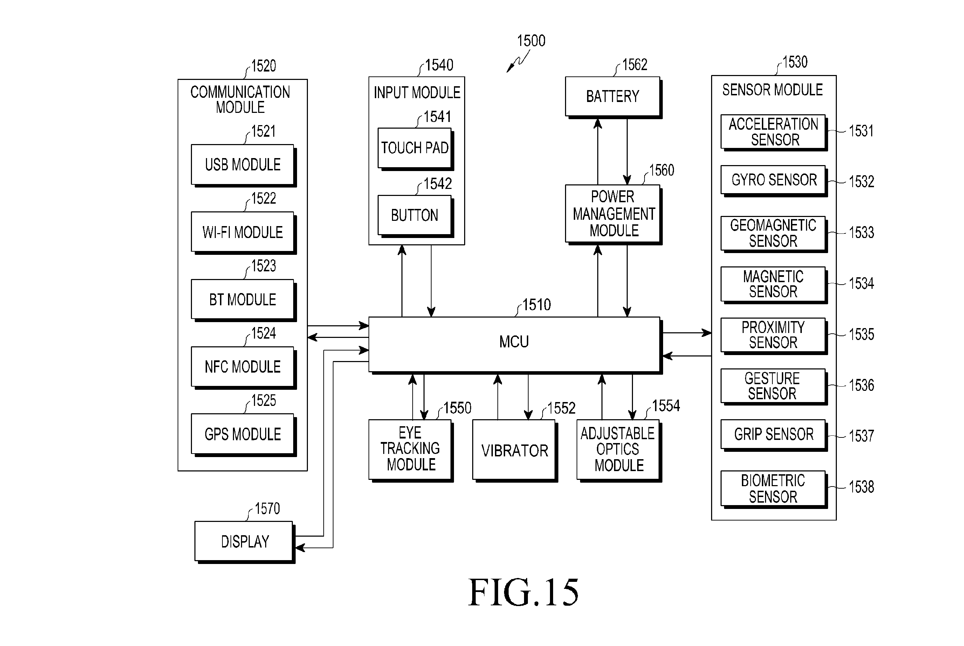

FIG. 15 is a block diagram illustrating an example of a configuration of a head mounted electronic device according to various embodiments of the present disclosure.

Referring to FIG. 15, a head mounted electronic device 1500 may be used independently from the electronic device 500 and may provide the user with a virtual screen in an equal or similar way. The head mounted electronic device 1500 may include an MCU 1510, a communication module 1520, a sensor module 1530, an input module 1540, an eye tracking module 1550, a vibrator 1552, an adjustable optics module 1554, a power management module 1560, a battery 1562, and a display 1570.

The MCU 1510, the communication module 1520, the sensor module 1530, the input module 1540, the eye tracking module 1550, the vibrator 1552, the adjustable optics module 1554, the power management module 1560, and the battery 1562 may be equally or similarly configured to, for example, the MCU 610, the communication module 620, the sensor module 630, input module 640, the eye tracking module 650, the vibrator 652, the adjustable optics module 654, the power management module 660, and the battery 662 of the head mounted electronic device 600 of FIG. 6, respectively.

The communication module 1520 may include, for example, a USB module 1521, a Wi-Fi module 1522, a BT module 1523, an NFC module 1524, and a GPS module 1525. The USB module 1521, the Wi-Fi module 1522, the BT module 1523, the NFC module 1524, and the GPS module 1525 may be equally or similarly configured to, for example, the USB module 621, the Wi-Fi module 622, the BT module 623, the NFC module 624, and the GPS module 625 of FIG. 6, respectively.

The sensor module 1530 may include at least one of, for example, an acceleration sensor 1531, a gyro sensor 1532, a geomagnetic sensor 1533, a magnetic sensor 1534, a proximity sensor 1535, a gesture sensor 1536, a grip sensor 1537, and a biometric sensor 1538. The acceleration sensor 1531, the gyro sensor 1532, the geomagnetic sensor 1533, the magnetic sensor 1534, the proximity sensor 1535, the gesture sensor 1536, the grip sensor 1537, and the biometric sensor 1538 may be equally or similarly configured to, for example, the acceleration sensor 631, the gyro sensor 632, the geomagnetic sensor 633, the magnetic sensor 634, the proximity sensor 635, the gesture sensor 636, the grip sensor 637, and the biometric sensor 638 of FIG. 6, respectively.

The input module 1540 may include a touch pad 1541 and a button 1542. The touch pad 1541 and the button 1542 may be equally or similarly configured to, for example, the touch pad 641 and the button 642 of FIG. 6, respectively.

Thereafter, descriptions that overlap the description made with reference to FIG. 6 will be omitted in the description of FIG. 15.

The head mounted electronic device 1500 may include, for example, a display 1570, which can be installed to be fixed to the body 402 of FIG. 4, instead of having a structure in which the electronic device 500 is coupled to the head mounted electronic device 1500. The display 1570 may be installed in the body 402 to provide a screen to the user through, for example, the lenses 408 and 410 of FIG. 4 instead of the display of the electronic device 500. The display 1570 may include displays corresponding to the number of physical lenses (for example, the lenses 408 and 410 of FIG. 4) or divide a single display screen into screens corresponding to the number of logical lenses and display the screens.

The head mounted electronic device 1500 may be used alone without the use of a display of another electronic device. The head mounted electronic device 1500 may receive images photographed by a plurality of omnidirectional photographing devices from the omnidirectional photographing devices or receive the images through the server (for example, the server 106), and provide the images to the user. An operation in which the head mounted electronic device 1500 provides the images photographed by the plurality of omnidirectional photographing devices to the user may be equal or similar to the described operation related to the electronic device 101 of FIG. 1 and the coupled electronic device 510 of FIG. 5B. Therefore, a more detailed description thereof will be omitted.

A display method of an electronic device according to various embodiments of the present disclosure may include selecting a first photographing device from a plurality of omnidirectional photographing devices arranged in different locations within a specified area, displaying an image photographed by the first photographing device, selecting a second photographing device from the photographing devices, determining a user's viewpoint viewing the displayed image, and displaying an image of an object view in which an object corresponding to the user's viewpoint is photographed among images photographed by the second photographing device.

The displaying of the image photographed by the first photographing device may include displaying an image starting from a default view specified to the first photographing device among images photographed by the first photographing device.

The displaying of the image of the object view may include transmitting viewpoint information on the user's viewpoint to a server selectively providing images photographed by the photographing devices, and receiving the image of the object view from the server.

The displaying of the image of the object view may include transmitting identification information on the first photographing device and viewpoint information on the user's viewpoint to the second photographing device, and receiving the image of the object view from the second photographing device.

Each of the selecting of the first photographing device and the selecting of the second photographing device may include displaying arrangement information indicating a location of each of the photographing devices within the area, and receiving an input for selecting one of the photographing devices.

The displaying of the arrangement information may include displaying utilization fee information on each of the photographing devices, and the receiving of the input for selecting one of the photographing devices may include performing charging processing for a utilization fee of the selected photographing device.

The displaying of the arrangement information may include displaying information indicating the currently selected photographing device.

The electronic device may be an electronic device coupled to a head mounted electronic device to be attachable to and detachable from the head mounted electronic device and provide a screen displaying the image.

The electronic device may correspond to a head mounted electronic device.

An electronic device according to various embodiments of the present disclosure may include a display that displays images photographed by a plurality of omnidirectional photographing devices arranged in different locations within a specified area, and a controller that, when a second photographing device is selected from the photographing devices while an image photographed by a first photographing device selected from the photographing devices is displayed on the display, determines a user's viewpoint viewing the displayed image and displays an image of an object view in which an object corresponding to the user's viewpoint is photographed among images photographed by the second photographing device on the display.

The controller may display an image starting from a default view specified to the first photographing device among images photographed by the first photographing device on the display.

The controller may receive an image photographed by the selected photographing device from a server selectively providing images photographed by the photographing devices.

When the second photographing device is selected, the controller may transmit viewpoint information on the user's viewpoint to the server and receive the image of the object view from the server.

When the second photographing device is selected, the controller may transmit identification information on the first photographing device and viewpoint information on the user's viewpoint to the second photographing device and receive the image of the object view from the second photographing device.

The controller may display arrangement information indicating a location of each of the photographing devices within the area on the display and receive an input for selecting one of the photographing devices.

When the arrangement information is displayed, the controller may display utilization fee information on each of the photographing devices on the display and, when the input for selecting one of the photographing devices is received, perform charging processing for a utilization fee of the selected photographing device.

When the arrangement information is displayed, the controller may display information indicating the currently selected photographing device on the display.

The electronic device may be an electronic device coupled to a head mounted electronic device to be attachable to and detachable from the head mounted electronic device and provide a screen displaying the image.

The electronic device may correspond to a head mounted electronic device.

The term "module" used in various embodiments of the present disclosure may refer to, for example, a "unit" including one of hardware, software, and firmware, or a combination of two or more of the hardware, software, and firmware. The term "module" may be interchangeable with a term, such as a unit, a logic, a logical block, a component, or a circuit. A "module" may be a minimum unit of an integrated component element or a part thereof. A "module" may be a minimum unit for performing one or more functions or a part thereof. A "module" may be mechanically or electronically implemented. For example, a "module" according to various embodiments of the present disclosure may include at least one of an application-specific IC (ASIC) chip, a field-programmable gate arrays (FPGAs), and a programmable-logic device for performing operations which have been known or are to be developed hereafter.

According to various embodiments of the present disclosure, at least a part of a device (for example, modules or functions thereof) or a method (for example, operations) according to the various embodiments of the present disclosure may be embodied by, for example, a command stored in a computer readable storage medium in a form of a programming module. When an instruction is executed by one or more processors (e.g., the processor 120 or a processor that may be included in each of the MCUs 610, 1510), the one or more processors may perform a function corresponding to the instruction. The computer-readable storage medium may, for example, be the memory 130 or a memory that may be included in each of the MCUs 610, 1510. At least a part of the programming module may, for example, be implemented (e.g., executed) by a processor. At least some of the programming modules may include, for example, a module, a program, a routine, a set of instructions or a process for performing one or more functions.

The computer readable recoding medium may include magnetic media, such as a hard disk, a floppy disk and a magnetic tape, optical media, such as a compact disc ROM (CD-ROM) and a DVD, magneto-optical media, such as a floptical disk, and a hardware device specially configured to store and execute a program instruction (for example, a programming module), such as a ROM, a RAM, a flash memory, and the like. In addition, the program instructions may include high class language codes, which can be executed in a computer by using an interpreter, as well as machine codes made by a compiler. The aforementioned hardware device may be configured to operate as one or more software modules in order to perform the operation of various embodiments of the present disclosure, and vice versa.

According to various embodiments of the present disclosure, a computer-readable recording medium having a program recorded therein to be executed in a computer may be provided. The program may include executable commands for performing a process to be performed by a processor. The process may include: selecting a first photographing device from a plurality of omnidirectional photographing devices arranged in different locations within a specified area, displaying an image photographed by the first photographing device, selecting a second photographing device from the photographing devices, determining a user's viewpoint viewing the displayed image, and displaying an image of an object view in which an object corresponding to the user's viewpoint is photographed among images photographed by the second photographing device.

The electronic device according to various embodiments of the present disclosure, may receive programs including instructions for performing the method of processing the web applications from program providing devices that are connected by wired or wireless communication, and may store the same. Alternatively, various electronic devices or servers may be the program providing devices. The program providing device may include a memory for storing the program, a communication module to execute wired or wireless communication with an electronic device, and a processor that transmits a corresponding program to the electronic device automatically or in response to the electronic device.

A module or a programming module according to the present disclosure may include at least one of the described component elements, a few of the component elements may be omitted, or additional component elements may be included. Operations executed by a module, a programming module, or other component elements according to various embodiments of the present disclosure may be executed sequentially, in parallel, repeatedly, or in a heuristic manner. Further, some operations may be executed according to another order or may be omitted, or other operations may be added.

While the present disclosure has been shown and described with reference to various embodiments thereof, it will be understood by those skilled in the art that various changes in form and details may be made therein without departing from the spirit and scope of the present disclosure as defined by the appended claims and their equivalents.

## Claims

1. A display method of an electronic device, the display method comprising:
selecting a first photographing device from a plurality of omnidirectional photographing devices arranged in different locations within a specified area;
displaying an image photographed by the first photographing device;
selecting a second photographing device from the photographing devices;
determining a user's viewpoint viewing the displayed image; and
displaying an image of an object view in which an object corresponding to the user's viewpoint is photographed among images photographed by the second photographing device.

2. The display method of claim 1, wherein the displaying of the image photographed by the first photographing device comprises displaying an image starting from a default view specified to the first photographing device among images photographed by the first photographing device.

3. The display method of claim 1, wherein the displaying of the image of the object view comprises:
transmitting viewpoint information on the user's viewpoint to a server selectively providing images photographed by the photographing devices; and
receiving the image of the object view from the server.

4. The display method of claim 1, wherein the displaying of the image of the object view comprises:
transmitting identification information on the first photographing device and viewpoint information on the user's viewpoint to the second photographing device; and
receiving the image of the object view from the second photographing device.

5. The display method of claim 1, wherein each of the selecting of the first photographing device and the selecting of the second photographing device comprises:
displaying arrangement information indicating a location of each of the photographing devices within the area; and
receiving an input for selecting one of the photographing devices.

6. The display method of claim 5, wherein the displaying of the arrangement information comprises displaying utilization fee information on each of the photographing devices, and wherein the receiving of the input for selecting one of the photographing devices comprises performing charging processing for a utilization fee of the selected photographing device.

7. An electronic device comprising:
a display configured to display images photographed by a plurality of omnidirectional photographing devices arranged in different locations within a specified area; and
a controller configured to:
when a second photographing device is selected from the photographing devices while an image photographed by a first photographing device selected from the photographing devices is displayed on the display, determine a user's viewpoint viewing the displayed image, and
display an image of an object view in which an object corresponding to the user's viewpoint is photographed among images photographed by the second photographing device on the display.

8. The electronic device of claim 7, wherein the controller is further configured to display an image starting from a default view specified to the first photographing device among images photographed by the first photographing device on the display.

9. The electronic device of claim 7, wherein the controller is further configured to receive an image photographed by the selected photographing device from a server selectively providing images photographed by the photographing devices.

10. The electronic device of claim 9, wherein, when the second photographing device is selected, the controller is further configured to:
transmit viewpoint information on the user's viewpoint to the server, and
receive the image of the object view from the server.

11. The electronic device of claim 7, wherein, when the second photographing device is selected, the controller is further configured to:
transmit identification information on the first photographing device and viewpoint information on the user's viewpoint to the second photographing device, and
receive the image of the object view from the second photographing device.

12. The electronic device of claim7, wherein the controller is further configured to:
display arrangement information indicating a location of each of the photographing devices within the area on the display, and
receive an input for selecting one of the photographing devices.

13. The electronic device of claim 12, wherein, when the arrangement information is displayed, the controller is further configured to:
display utilization fee information on each of the photographing devices on the display, and
when the input for selecting one of the photographing device is received, perform charging processing for a utilization fee of the selected photographing device.

14. The electronic device of claim 7, wherein the electronic device is coupled to a head mounted electronic device to be attachable to and detachable from the head mounted electronic device and is configured to provide a screen displaying the image.

15. The electronic device of claim 7, wherein the electronic device corresponds to a head mounted electronic device.
